# EUROPÄISCHE PATENTSCHRIFT

(11) **EP 3 189 263 B1**
(45) Veröffentlichungstag und Bekanntmachung des Hinweises auf die Patenterteilung: **18.04.2018**
(21) Anmeldenummer: 15775754.3
(22) Anmeldetag: 12.10.2015
(51) Int. Cl.: F16L 37/084, F16L 37/091

(54) **ANSCHLUSSVORRICHTUNG FÜR EINE FLUIDLEITUNG**
CONNECTING DEVICE FOR A FLUID LINE
DISPOSITIF DE RACCORDEMENT POUR UNE CONDUITE DE FLUIDE

(30) Priorität: 09.12.2014 DE 102014225279
(43) Veröffentlichungstag der Anmeldung: 12.07.2017
(73) Patentinhaber: Festo AG & Co. KG, 73734 Esslingen (DE)
(72) Erfinder: WEISS, Martin, 73035 Göppingen (DE)
(74) Vertreter: Patentanwälte Magenbauer & Kollegen Partnerschaft mbB
(86) Internationale Anmeldenummer: PCT/EP2015/073582
(87) Internationale Veröffentlichungsnummer: WO 2016/091434

(56) Entgegenhaltungen:
- WO-A1-01/94798
- WO-A1-2011/003778
- DE-A1- 2 216 466

## Beschreibung

Die Erfindung betrifft eine Anschlussvorrichtung für eine Fluidleitung, ausgeführt als Baugruppe mit mindestens einer Haltemanschette und einem gesonderten Trägerbauteil, wobei die Haltemanschette ausgebildet ist, um in einer Gebrauchsstellung mit ihrer Vorderseite voraus in eine ein Innengewinde aufweisende Befestigungsöffnung des gesonderten Trägerbauteils eingesetzt und durch Eingriff in das Innengewinde in dieser Befestigungsöffnung befestigt zu sein und wobei die Haltemanschette axial von einer Einstecköffnung durchsetzt ist, in die eine anzuschließende Fluidleitung von der Rückseite der Haltemanschette her einsteckbar ist, wobei die Haltemanschette ein die Einstecköffnung umschließendes, ringförmig strukturiertes Halteelement aufweist, das über mehrere schräg nach radial innenragende Halteklauen verfügt, die ausgebildet sind, um den Außenumfang der in die Einstecköffnung eingesteckten Fluidleitung zum Zwecke ihres Festhaltens zu beaufschlagen.

Eine aus der EP 0 185 802 A1 bekannte Anschlussvorrichtung dieser Art verfügt über eine Haltemanschette, die einen nach Art einer Schraube konzipierten Grundkörper besitzt, mit dem sie in eine mit einem Innengewinde ausgestattete Befestigungsöffnung eines gesonderten Trägerbauteils einschraubbar ist. Die Haltemanschette ist von einer Einstecköffnung axial durchsetzt, in die eine anzuschließende Fluidleitung von der außerhalb des Trägerbauteils liegenden Rückseite her einsteckbar ist. An dem Grundkörper ist ein zu der Einstecköffnung koaxiales Halteelement fixiert, das über mehrere schräg nach radial innen ragende Halteklauen verfügt, die an der Vorderseite des Grundkörpers vor die Einstecköffnung ragen. Beim Einstecken der Fluidleitung werden die Halteklauen nach außen gedrückt, sodass sie unter Vorspannung am Außenumfang der Fluidleitung anliegen und selbige gegen ein Herausziehen aus der Haltemanschette sichern. Um auch hohen Zugkräften einen ausreichenden Wiederstand entgegensetzen zu können, muss der mit dem Außengewinde versehene Grundkörper der Haltemanschette aus einem hochwertigen und daher teuren Material gefertigt werden. Es besteht zudem das Problem, dass sich das auf den Grundkörper aufgepresste, mit den Halteklauen versehene Halteelement aufgrund vorhandener Fertigungstoleranzen oder bei häufiger Betätigung eventuell vom Grundkörper löst, sodass ein sicherer Halt einer eingesteckten Fluidleitung nicht mehr unter allen Umständen gewährleistet werden kann.

Aus der EP 0 702 184 A1 ist eine Anschlussvorrichtung bekannt, die über ein mit Halteklauen versehenes ringförmiges Halteelement verfügt, das an seinem Außenumfang über abstehende Zähne verfügt, die sich in der zylindrischen Innenoberfläche eines hülsenförmigen Trägerbauteils verhaken können, um einem Herausziehen des Halteelementes entgegenzuwirken.

Aus der DE 10 2012 021 683 A1 ist eine Anschlussvorrichtung bekannt, die über eine Haltemanschette verfügt, welche sich aus einem aus Elastomermaterial bestehenden Hüllkörper und einem in den Hüllkörper eingebetteten, über schräge Halteklauen verfügenden Halteelement zusammensetzt. Die Haltemanschette ist in eine Befestigungsöffnung eines Trägerbauteils eingeschnappt, indem sie an ihrem Außenumfang über eine Ringnut verfügt, in die ein an dem Trägerbauteil ausgebildeter ringförmiger Radialvorsprung eingreift.

Die FR 2 881 502 A1 beschreibt eine Anschlussvorrichtung, die mittels eines Sicherungsringes in einer Befestigungsöffnung fixierbar ist, wobei der Sicherungsring über mehrere entlang seines Umfanges verteilte Zähne verfügt, die in ein Innengewinde der Befestigungsöffnung eingerastet sind. Die Zähne sind mit zwei unterschiedlichen Längen ausgeführt und in der Umfangsrichtung des Sicherungsringes abwechselnd aufeinanderfolgend angeordnet, sodass jeweils ein kürzerer Zahn zwischen zwei längeren Zähnen liegt.

Es ist die Aufgabe der vorliegenden Erfindung, eine Anschlussvorrichtung für eine Fluidleitung zu schaffen, die bei kostengünstigem Aufbau einen sicheren Halt der Haltemanschette in der Befestigungsöffnung eines Trägerbauteils gewährleistet.

Zur Lösung dieser Aufgabe ist in Verbindung mit den eingangs genannten Merkmalen vorgesehen, dass das Halteelement mehrere mit Abstand zueinander rings um die Einstecköffnung herum verteilt angeordnete Sicherungsarme aufweist, die über nach radial außen ragende Endabschnitte verfügen, die auf einer hinsichtlich ihrer Steigung an die Steigung des Innengewindes des Trägerbauteils angepassten Wendellinie liegen und die in der Gebrauchsstellung der Haltemanschette in den Gewindegang des Innengewindes des Trägerbauteils eingreifende Eingriffsvorsprünge bilden.

Auf diese Weise wird das mit den Halteklauen versehene Halteelement zur formschlüssigen Verankerung der Haltemanschette in der Befestigungsöffnung des Trägerbauteils genutzt. Das Halteelement ist mit einer Mehrzahl von Sicherungsarmen ausgestattet, deren nach radial außen ragenden Endabschnitte Eingriffsvorsprünge bilden, die in der Lage sind, in den Gewindegang des Innengewindes des Trägerbauteils einzugreifen. Ein sicherer und genauer Eingriff ist dadurch gewährleistet, dass die Eingriffsvorsprünge auf einer Wendellinie liegen, also auf einer schraubenförmigen Linie, deren Steigung der Gewindesteigung des Innengewindes zumindest annähernd entspricht. Die Eingriffsvorsprünge der Sicherungsarme greifen also ähnlich einem Außengewinde in das Innengewinde der Befestigungsöffnung ein, wenn die Haltemanschette in die Befestigungsöffnung eingesetzt ist. Das Einsetzen der Haltemanschette in die Befestigungsöffnung des Trägerbauteils ist mittels eines einfachen Schraubvorganges möglich, bei dem die Eingriffsvorsprünge der Sicherungsarme in das Innengewinde der Befestigungsöffnung eingedreht werden. Verfügen die Sicherungsarme über eine gewisse Federelastizität, ist aber auch eine derartige Ausgestaltung möglich, dass die Eingriffsvorsprünge in das Innengewinde eingerastet werden, indem die Haltemanschette rein axial in die Befestigungsöffnung hineingedrückt wird.

Vorteilhafte Weiterbildungen der Erfindung gehen aus den Unteransprüchen hervor.

Die Sicherungsarme sind zweckmäßigerweise ausschließlich entlang einer Wendellinie verteilt, deren maximale Erstreckung 360 Grad beträgt. Dadurch wird ein optimaler Halt mit einem geringstmöglichen konstruktiven Aufwand erzielt. Vorzugsweise sind die Sicherungsarme gleichmäßig um die Längsachse des Halteelementes herum verteilt.

Bei einer bevorzugten Ausführungsform sind die Sicherungsarme laschenartig ausgebildet, wobei sie insbesondere abgebogen oder abgewinkelt sind, um ihre Endabschnitte auf der angestrebten Wendellinie beziehungsweise Schraubenlinie zu platzieren.

Bei dem Halteelement handelt es sich vorzugsweise um ein einstückiges Bauteil. Es besteht insbesondere aus einem federelastischen Metall, insbesondere aus Edelstahl. Bevorzugt ist es durch einen kombinierten Stanz- und Biegevorgang gefertigt, sodass es als sogenanntes Stanzbiegeteil vorliegt.

Bevorzugt ist das Halteelement mit einem als Tragring bezeichneten ringförmigen Abschnitt ausgestattet, der die Einstecköffnung koaxial umschließt und an dem die Sicherungsarme einstückig angeordnet sind. Dabei befinden sich die Sicherungsarme vorzugsweise entweder am Innenumfang oder am Außenumfang des Tragringes. Eine Anbringung am Innenumfang begünstigt eine Bauform, bei der im in der Befestigungsöffnung montierten Zustand der Haltemanschette der Tragring außerhalb der Befestigungsöffnung verbleibt und lediglich die Sicherungsarme in die Befestigungsöffnung hineinragen. Der Tragring kann hierbei als Anschlagmittel zur Vorgabe der Einschraubtiefe der Haltemanschette dienen. Sind die Sicherungsarme am Außenumfang des Tragringes angeordnet, tauchen im in der Befestigungsöffnung fixierten Zustand der Haltemanschette nicht nur die Sicherungsarme, sondern zweckmäßigerweise der gesamte Tragring in die Befestigungsöffnung ein.

Bei einer möglichen Ausgestaltung ragen die Sicherungsarme von dem Tragring schräg nach radial außen weg, wobei die als Eingriffsvorsprünge fungierenden Endabschnitte dadurch auf der gewünschten Wendellinie zu liegen kommen, dass sich die Sicherungsarme in ihrer Schrägstellung voneinander unterscheiden. Bezogen auf eine zur Längsachse der Haltemanschette radiale Ringebene des Tragringes ragen die Sicherungsarme zweckmäßigerweise mit sich voneinander unterscheidender Neigung nach radial außen von dem Tragring weg, wobei die Endabschnitte der Sicherungsarme bei einigen Sicherungsarmen auf der einen Axialseite und bei anderen Sicherungsarmen auf der anderen Axialseite der Ringebene liegen können. Die unterschiedlichen Schrägstellungen lassen sich insbesondere dadurch erzielen, dass die Sicherungsarme bezüglich des Tragringes in sich voneinander unterscheidender Weise umgebogen sind.

Bevorzugt sind die schräg nach radial außen vom Tragring wegragenden Sicherungsarmen am Außenumfang des Tragringes angeordnet.

Eine andere, ebenfalls vorteilhafte Möglichkeit zur Realisierung der Eingriffsvorsprünge besteht darin, die Sicherungsarme L-förmig auszubilden, sodass sie jeweils einen vom Tragring axial abstehenden ersten L-Schenkel aufweisen, an den sich ein nach radial außen ragender, jeweils einen Eingriffsvorsprung bildender zweiter L-Schenkel anschließt. Die Platzierung der Eingriffsvorsprünge auf der gewünschten Wendellinie wird hier dadurch realisiert, dass die ersten L-Schenkel unterschiedlich lang sind. Bei dieser Bauform sind die Sicherungsarme zweckmäßigerweise am Innenumfang des Tragringes angeordnet.

Die die Eingriffsvorsprünge bildenden zweiten L-Schenkel der L-förmigen Sicherungsarme haben bei einer bevorzugten Ausgestaltung bezogen auf den jeweils zugeordneten ersten L-Schenkel eine schräge Ausrichtung, wobei sie radial nach au-ßen und gleichzeitig in Richtung zu dem die Sicherungsarme tragenden Tragring ragen. Es ergibt sich dadurch insbesondere eine hakenartige Struktur der Sicherungsarme, was die Verankerung im Innengewinde der Befestigungsöffnung eines Trägerbauteils begünstigt.

Bei allen Ausführungsformen kann der Tragring so gestaltet sein, dass er sich an denjenigen Umfangsabschnitten, an denen sich ein Sicherungsarm befindet, von den Sicherungsarmen nicht strukturell abgrenzt, sodass insgesamt der Eindruck entsteht, als ob benachbarte Sicherungsarme durch Verbindungsstege miteinander verbunden sind.

Aus besonders vorteilhaft wird es angesehen, wenn die Halteklauen ebenfalls an dem Tragring angeordnet sind, wobei sie zweckmäßigerweise wie die Sicherungsarme einstückig mit dem Tragring verbunden sind. Vor allem zwei Ausführungsformen werden bevorzugt, wobei bei der einen Ausführungsform die Halteklauen am Innenumfang und die Sicherungsarme am Außenumfang des Tragringes angeordnet sind, während bei der anderen Ausführungsform die Halteklauen am Außenumfang und die Sicherungsarme am Innenumfang des Tragringes angeordnet sind.

Befinden sich die Halteklauen am Innenumfang des Tragringes, sind sie zweckmäßigerweise unmittelbar an dem Tragring angeformt. In diesem Fall sind vorzugsweise auch die Sicherungsarme unmittelbar an dem Außenumfang des Tragringes angeformt, wobei sie insbesondere mit geneigter Ausrichtung nach radial außen von dem Tragring abstehen.

Insbesondere dann, wenn die Halteklauen am Außenumfang des Tragringes angebracht sind, empfiehlt sich eine Ausführungsform, bei der die Halteklauen nicht unmittelbar an dem Tragring fixiert sind, sondern mit axialem Abstand zu dem Tragring an den Endbereichen von Tragarmen angebracht sind, die von dem Tragring axial abstehen und die ihrerseits am Außenumfang des Tragarmes angebracht sind. Mit einer solchen Konfiguration lässt sich eine Bauform der Haltemanschette realisieren, bei der nur die Sicherungsarme in die Befestigungsöffnung des Trägerbauteils eintauchen, während die an den Tragarmen sitzenden Halteklauen außerhalb der Befestigungsöffnung verbleiben.

Bei allein Ausführungsformen ist es vorteilhaft, wenn die Halteklauen und die Sicherungsarme paarweise jeweils am gleichen Umfangsabschnitt des Tragringes angeordnet sind. Prinzipiell ist aber auch eine Bauform denkbar, bei der die Halteklauen und die Sicherungsarme in der Umfangsrichtung des Tragabschnittes mit Versatz zueinander angeordnet sind und insbesondere auf Lücke zueinander. Letzteres bedeutet, dass jede Halteklaue in der Umfangsrichtung des Tragringes zwischen zwei benachbarten Sicherungsarmen zum liegen kommen.

Bei einer besonders zweckmäßigen Ausgestaltung weist das Halteelement mindestens eine radial nach außen abstehende Anschlaglasche auf. Diese Anschlaglasche ist in der Lage, durch axiale Abstützung am Trägerbauteil die Einsetztiefe der Haltemanschette bezüglich der Befestigungsöffnung bei der Montage zu begrenzen. Die Abstützung erfolgt insbesondere an einer die Mündung der Befestigungsöffnung umrahmenden Außenfläche des Trägerbauteils. Je nach Ausgestaltung der Haltemanschette erfolgt die Abstützung entweder durch direkten Kontakt zwischen der Anschlaglasche und dem Trägerbauteil oder aber indirekt dadurch, dass die Anschlaglasche einen ihr axial vorgelagerten Abschnitt eines nachstehend erläuterten Hüllkörpers abstützt, der seinerseits in der Gebrauchsstellung der Haltemanschette mit dem Trägerbauteil axial verspannt ist. Damit die Anschlaglasche in der Abstützrichtung eine hohe Steifigkeit besitzt, ist sie zweckmäßigerweise mit zur Längsachse des Halteelementes paralleler Laschenebene, also quasi hochkant, ausgerichtet.

Zweckmäßigerweise weist das Halteelement mehrere in seiner Umfangsrichtung verteilte Anschlaglaschen auf, beispielsweise drei Anschlaglaschen, die um jeweils 120° versetzt zueinander angeordnet sind.

Vorzugsweise ist jede Anschlaglasche einstückig mit einem der Sicherungsarme des Halteelementes ausgebildet, wobei jede Anschlaglasche an einem eigenen Sicherungsarm angeordnet ist. Bei L-förmigen Sicherungsarmen gemäß der obigen Beschreibung sind die Anschlaglaschen zweckmäßigerweise an den sich axial erstreckenden ersten L-Schenkeln angeordnet, insbesondere als abgebogene Laschen an einem Längsrand derselben.

Vorzugsweise enthält die Haltemanschette zusätzlich zu dem Halteelement einen einstückigen, insbesondere gummielastischen Hüllkörper, in den das Halteelement zumindest partiell und bevorzugt zumindest annähernd vollständig eingebettet ist. Der Hüllkörper, der insbesondere aus einem Elastomermaterial besteht, ist vorzugsweise unmittelbar bei seiner Herstellung durch Spritzgießen unter Abdichtung stoffschlüssig an das Halteelement angeformt worden. Ein solcher gummielastischer Spritzgusskörper zeichnet sich durch eine besonders innige Verbindung zu dem Halteelement aus.

Der gummielastische Hüllkörper kann unmittelbar eine kostengünstig realisierbare Dichtungsstruktur bilden, die eine Abdichtung der Haltemanschette bezüglich sowohl dem Trägerbauteil als auch der eingesteckten Fluidleitung bewirkt. Die Dichtungsstruktur definiert zweckmäßigerweise einen zum abdichtenden Anliegen am Trägerbauteil vorgesehenen ringförmigen Außendichtungsabschnitt und darüber hinaus mindestens einen die eingesteckte Fluidleitung an ihrem Außenumfang abdichtend umschließenden ringförmigen Innendichtungsabschnitt. Auf diese Weise erübrigt sich eine Ausstattung der Anschlussvorrichtung mit gesonderten Dichtungselementen, insbesondere Dichtungsringen. Auf solche gesonderten Dichtungselemente wird allerdings zweckmäßigerweise dann zurückgegriffen, wenn der Hüllkörper keine gummielastischen und mithin keine selbst abdichtenden Eigenschaften besitzt.

Bevorzugt weist der Hüllkörper der Haltemanschette an seinem Innenumfang im Bereich der Eingriffsvorsprünge einen konzentrisch angeordneten ringförmigen Wulst auf, der radial nach innen vorsteht. Der Innendurchmesser des Hüllkörpers im Bereich dieses ringförmigen Wulstes ist im nicht eingesteckten Zustand einer Fluidleitung geringer als der Außendurchmesser der Fluidleitung. Dadurch wird der ringförmige Wulst beim Einstecken der Fluidleitung durch diese Fluidleitung radial aufgeweitet und radial nach außen verformt, sodass die Eingriffsvorsprünge der Sicherungsarme aktiv in den zugeordneten Gewindegang des Innengewindes des Trägerbauteils hineindrückt werden, was die axial formschlüssige Verankerung der Haltemanschette optimiert. Dabei ist vorteilhaft, dass im anschließenden Betrieb die radiale Spannkraft zusätzlich automatisch innendruckabhängig angepasst wird, wenn die Fluidleitung aus einem elastisch nachgiebigen Material besteht und beispielsweise ein Fluidschlauch ist. Je höher der in der Fluidleitung anstehende Fluiddruck ist, desto stärker wird die Fluidleitung selbst radial aufgeweitet und umso weiter drückt sie den ringförmigen Wulst nach außen.

Vorzugsweise ist der Hüllkörper mit einem hülsenförmigen Au-ßengewindeabschnitt versehen, mit dem er in das Innengewinde der Befestigungsöffnung des Trägerbauteils einschraubbar ist.

Dabei sind an die Festigkeit des Hüllkörpers im Bereich seines Außengewindes keine besonders hohen Anforderungen gestellt, weil das von dem Hüllkörper zumindest partiell umhüllte Halteelement durch seinen mittels der Eingriffsvorsprünge realisierten Gewindeeingriff für eine hohe axiale Festigkeit der Gewindeverbindung sorgt. Dies begünstigt die vorteilhafte Ausgestaltung des Hüllkörpers aus einem gummielastischen Material, insbesondere aus einem Elastomermaterial. Auch der Außengewindeabschnitt des Hüllkörpers besteht dabei aus dem gummielastischen Material, das durch die Eingriffsvorsprünge der Sicherungsarme quasi lokal verstärkt wird.

In dem Trägerbauteil ist zweckmäßigerweise ein Fluidkanal ausgebildet, der mit der Befestigungsöffnung kommuniziert. Der in einer Fluidleitung ausgebildete Leitungskanal steht somit bei angeschlossener Fluidleitung mit dem Fluidkanal des Trägerbauteils in Verbindung.

Die Anschlussvorrichtung ist bei einer möglichen Ausführungsform als Anschlussstück konzipiert, das sich an einem fluidtechnischen Gerät, beispielsweise ein Ventil oder ein Antrieb, fixieren lässt, um an diesem fluidtechnischen Gerät mindestens eine Fluidleitung anschließen zu können. Darüber hinaus besteht allerdings auch die Möglichkeit, unmittelbar einen Bestandteil eines fluidtechnischen Gerätes, beispielsweise dessen Gerätegehäuse, als Trägerbauteil zu nutzen, in dem die mit einem Innengewinde versehene Befestigungsöffnung ausgebildet ist und in dem die Haltemanschette fixiert wird. Soll die Anschlussvorrichtung die Möglichkeit bieten, eine eingesteckte Fluidleitung bei Bedarf jederzeit einfach und beschädigungsfrei wieder aus der Haltemanschette entfernen zu können, ist der Haltemanschette zweckmäßigerweise eine zum lösenden Betätigen der Halteklauen dienende Lösehülse zugeordnet. Eine solche Lösehülse ist in der Haltemanschette axial verschiebbar gelagert, wobei sie den Halteklauen axial au-ßen vorgelagert ist und mit einem Betätigungsabschnitt rückseitig aus der Haltemanschette herausragt. Durch Druck auf den Betätigungsabschnitt kann die Lösehülse in Richtung der Vorderseite der Haltemanschette verschoben werden, sodass sie rückseitig auf die Halteklauen einwirkt und selbige vom Au-ßenumfang der eingesteckten Fluidleitung abhebt.

Nachfolgend wird die Erfindung anhand der beiliegenden Zeichnung näher erläutert. In dieser zeigen:
- Figur 1: einen Längsschnitt durch eine bevorzugte erste Ausführungsform der erfindungsgemäßen Anschlussvorrichtung, bei der das Halteelement im montierten Zustand der Haltemanschette zur Gänze im Innern der Befestigungsöffnung eines Trägerbauteils aufgenommen ist,
- Figur 2: die Anordnung aus Figur 1 in einer Explosionsdarstellung,
- Figur 3: die Explosionsdarstellung aus Figur 2 in einem Längsschnitt,
- Figur 4: eine Einzeldarstellung der gemäß Figuren 1 bis 3 vorhandenen Haltemanschette in einer Seitenansicht,
- Figur 5: die Haltemanschette aus Figur 4 in einem Längsschnitt, wobei das zugeordnete Trägerbauteil gestrichelt angedeutet ist,
- Figur 6: eine perspektivische Längsschnittdarstellung des gemäß Figuren 1 bis 5 zum Einsatz kommenden Halteelementes,
- Figur 7: einen Längsschnitt durch den vorderen Endabschnitt der Haltemanschette,
- Figur 8: eine Einzeldarstellung des gemäß Figuren 1 bis 7 vorhandenen Halteelementes in einer Schrägansicht von unten her,
- Figur 9: eine weitere Ausführungsform der erfindungsgemäßen Anschlussvorrichtung, bei der der die Halteklauen aufweisende Längenabschnitt des Halteelements im montierten Zustand der Haltemanschette außerhalb der Befestigungsöffnung eines Trägerbauteils liegt,
- Figur 10: die Anordnung aus Figur 9 in einer Explosionsdarstellung,
- Figur 11: die Explosionsdarstellung aus Figur 10 in einem Längsschnitt,
- Figur 12: eine Einzeldarstellung der gemäß Figuren 9 bis 11 vorhandenen Haltemanschette in einer Seitenansicht,
- Figur 13: die Haltemanschette aus Figur 12 in einem Längsschnitt, wobei das zugeordnete Trägerbauteil gestrichelt angedeutet ist,
- Figur 14: eine perspektivische Längsschnittdarstellung des gemäß Figuren 9 bis 13 zum Einsatz kommenden Halteelementes,

- Figur 15: einen Längsschnitt durch den vorderen Endabschnitt der Haltemanschette,
- Figur 16: eine Einzeldarstellung des gemäß Figuren 9 bis 15 vorhandenen Halteelementes in einer Schrägansicht von unten her,
- Figur 17: eine weitere Ausführungsform der erfindungsgemäßen Anschlussvorrichtung, bei der der die Halteklauen aufweisende Längenabschnitt des Halteelements im montierten Zustand der Haltemanschette wiederum außerhalb der Befestigungsöffnung eines Trägerbauteils liegt,
- Figur 18: die Anordnung aus Figur 17 in einer Explosionsdarstellung,
- Figur 19: die Explosionsdarstellung aus Figur 18 in einem Längsschnitt,
- Figur 20: eine Einzeldarstellung der gemäß Figuren 17 bis 19 vorhandenen Haltemanschette in einer Seitenansicht,
- Figur 21: die Haltemanschette aus Figur 20 in einem Längsschnitt, wobei das zugeordnete Trägerbauteil gestrichelt angedeutet ist,
- Figur 22: eine perspektivische Längsschnittdarstellung des gemäß Figuren 17 bis 21 zum Einsatz kommenden Halteelementes,
- Figur 23: einen Längsschnitt durch den vorderen Endabschnitt der Haltemanschette, und
- Figur 24: eine Einzeldarstellung des gemäß Figuren 17 bis 23 vorhandenen Halteelementes in einer Schrägansicht von unten her.

Mangels anders lautender Angaben bezieht sich die nachstehende Beschreibung auf sämtliche in der Zeichnung illustrierten Ausführungsbeispiele der insgesamt mit Bezugsziffer 1 bezeichneten Anschlussvorrichtung.

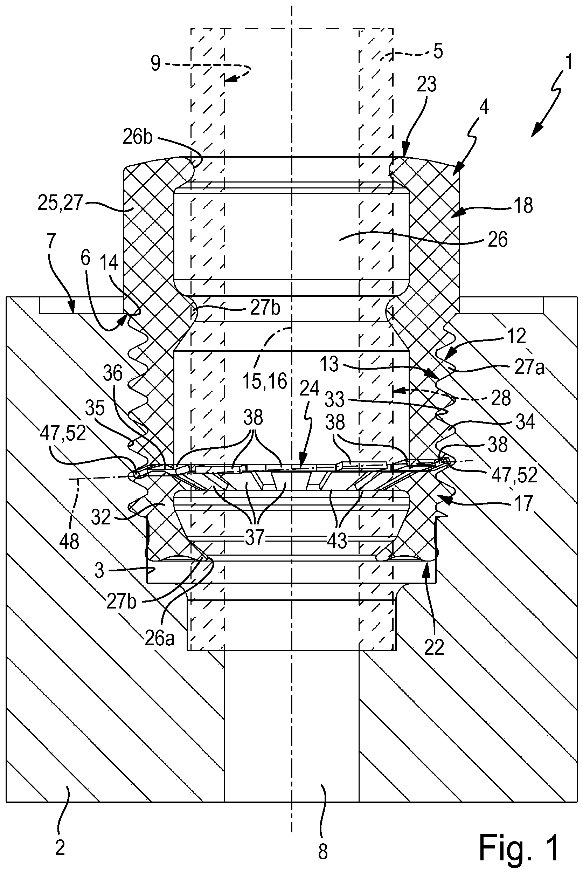

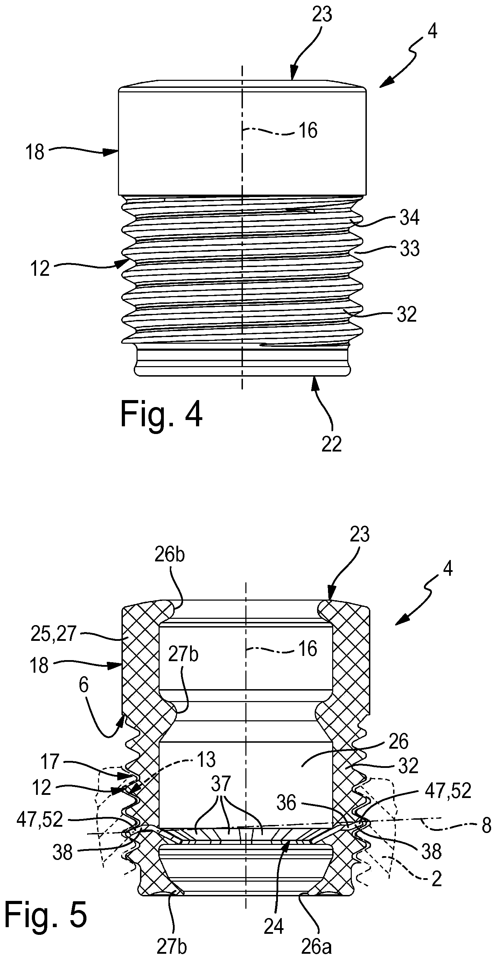

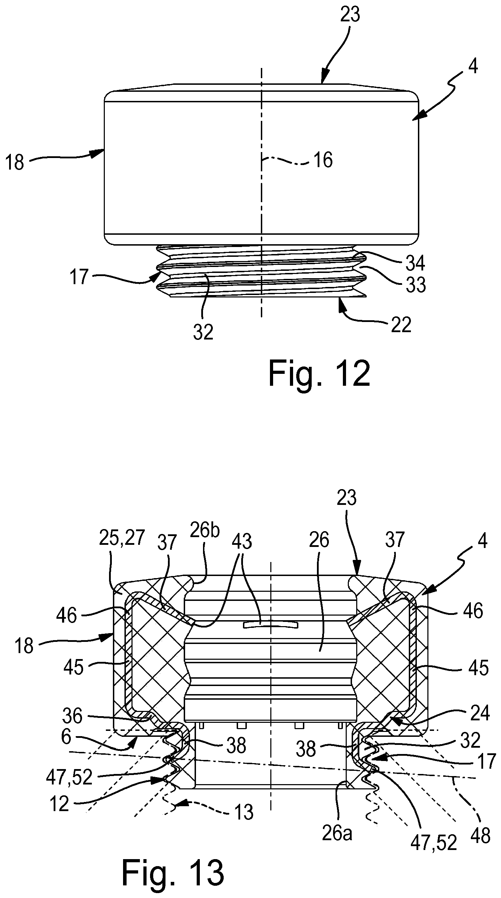

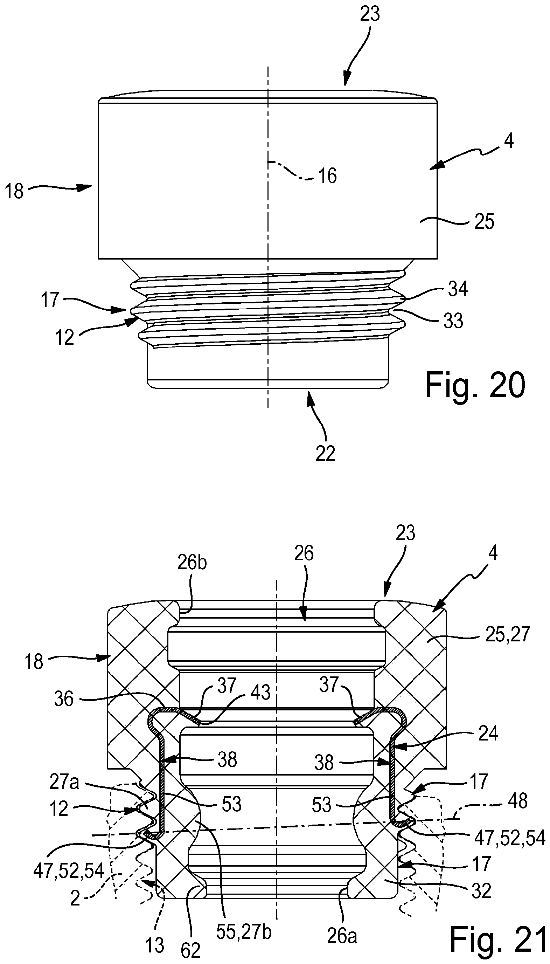

Die Anschlussvorrichtung 1 enthält eine manschettenförmig gestaltete Halteeinrichtung, die als Haltemanschette 4 bezeichnet wird, die in ihrer in den Figuren 1, 5, 9, 13, 17 und 21 illustrierten Gebrauchsstellung in eine Befestigungsöffnung 3 eines separaten Trägerbauteils 2 eingreift und in dieser Befestigungsöffnung 3 befestigt ist.

Die Anschlussvorrichtung 1 eignet sich zum Anschließen einer Fluidleitung 5, die zum Hindurchleiten eines fluidischen Druckmediums wie Druckluft oder Druckflüssigkeit ausgebildet ist. Bevorzugt handelt es sich bei der anschließbaren Fluidleitung 5 um einen flexiblen Schlauch. Gleichwohl kann es sich bei ihr auch um ein starres Rohr handeln. In den Figuren 1, 9 und 17 ist die Fluidleitung 5 im angeschlossenen Zustand gezeigt. Die Haltemanschette 4 kann mit jedem beliebigen Trägerbauteil 2, das über eine geeignet gestaltete Befestigungsöffnung 3 verfügt, kombiniert werden. Vorhandene Trägerbauteile 2 können somit nach Bedarf mit einer oder mehreren Haltemanschetten 4 ausgestattet werden. Die Anschlussvorrichtung 1 ist erfindungemäß als Baugruppe ausgeführt. Diese setzt sich aus mindestens einer Haltemanschette 4 und einem Trägerbauteil 2 mit mindestens einer an die Haltemanschette 4 angepassten Befestigungsöffnung 3 zusammen. Dabei kann die Haltemanschette 4 schon ab Werk bei der Auslieferung am Trägerbauteil 2 in ihrer Gebrauchsstellung montiert sein oder sie kann als lose Beigabe beiliegen, die erst von Anwender mit dem Trägerbauteil 2 vereinigt wird.

Die Anschlussvorrichtung 1 ist bei einem möglichen Ausführungsbeispiel als Anschlussstück konzipiert, bei dem das Trägerbauteil 2 mindestens eine nicht weiter illustrierte Befestigungsschnittstelle aufweist, mit der es und somit das Anschlussstück in seiner Gesamtheit an einer fluidtechnischen Komponente fixierbar ist, beispielsweise an einem Ventil, einem fluidbetätigten Antrieb oder einem Druckluft-Wartungsgerät. Bei entsprechender Ausgestaltung der Befestigungsschnittstelle lässt sich daran auch eine weitere Fluidleitung fixieren. Das Anschlussstück kann ohne weiteres mehrere Haltemanschetten 4 aufweisen, um beispielsweise ein Winkelstück oder eine zum gleichzeitigen Anschließen mehrerer Fluidleitungen geeignetes T-Stück zu realisieren.

Bei einem anderen Ausführungsbeispiel ist das Trägerbauteil 2 direkt von einem Bestandteil einer fluidtechnischen Komponente der oben genannten Art gebildet, beispielsweise vom Gehäuse der fluidtechnischen Komponente. Auf diese Weise erübrigt sich ein eigenständiges, von der fluidtechnischen Komponente unabhängiges Trägerbauteil 2.

Die in dem Trägerbauteil 2 nach Art einer Ausnehmung ausgebildete Befestigungsöffnung 3 mündet zu einer im Folgenden als Anschluss-Außenfläche 7 bezeichneten Außenfläche des Trägerbauteils 2 aus. Die Befestigungsöffnung hat eine Längsachse 15. Im Innern des Trägerbauteils 2 schließt sich an die Befestigungsöffnung 3, insbesondere mit koaxialer Ausrichtung, ein Fluidkanal 8 an, mit dem ein die Fluidleitung 5 durchsetzender Leitungskanal 9 bei angeschlossener Fluidleitung 5 in Fluidverbindung steht. Von dem Trägerbauteil 2 ist in der Zeichnung nur ein Ausschnitt gezeigt.

Die Haltemanschette 4 hat eine Längsachse 16 und verfügt quer zu dieser Längsachse 16 über einen ringförmigen Querschnitt. Sie hat eine axial orientierte Vorderseite 22 und eine diesbezüglich axial entgegengesetzte Rückseite 23 und ist koaxial durchbrochen, wobei die Durchbrechung aufgrund ihrer Funktion als Einstecköffnung 26 bezeichnet wird. Die Einstecköffnung 26 mündet einerseits mit einer vorderen Mündungsöffnung 26a zu der Vorderseite 22 und mit einer entgegengesetzten rückseitigen Mündungsöffnung 26b zu der Rückseite 23 aus.

In ihrer montierten Gebrauchsstellung ragt die Haltemanschette 4 durch die an der Anschluss-Außenfläche 7 liegende Mündung 14 der Befestigungsöffnung 3 hindurch in die Befestigungsöffnung 3 hinein. Grundsätzlich kann die Haltemanschette 4 dabei über ihre gesamte Länge in der Befestigungsöffnung 3 aufgenommen sein. Eine vereinfachte Handhabung bei der Montage und eventuellen Demontage ergibt sich allerdings, wenn die Haltemanschette 4 nur mit einem Teil ihrer axialen Länge in die Befestigungsöffnung 3 hineinragt. Der sich in der Befestigungsöffnung 3 erstreckende Längenabschnitt der Haltemanschette 4 sei im Folgenden als Befestigungsabschnitt 17 bezeichnet und der außerhalb der Befestigungsöffnung 3 liegende Längenabschnitt als Kopfabschnitt 18.

Der Kopfabschnitt 18 hat zweckmäßigerweise einen größeren Durchmesser als der Befestigungsabschnitt 17, woraus an der dem Befestigungsabschnitt 17 zugewandten Stirnseite des Kopfabschnittes 18 eine den Befestigungsabschnitt 17 umrahmende ringförmige Abstützfläche 6 resultiert, die in der montierten Gebrauchsstellung der Haltemanschette 4 zweckmäßigerweise an der die Mündung 4 umrahmenden Anschluss-Außenfläche 7 des Trägerbauteils 2 anliegt.

Der in der montierten Gebrauchsstellung in die Befestigungsöffnung 3 eintauchende Längenabschnitt der Haltemanschette 4, bei dem es sich exemplarisch um den Befestigungsabschnitt 17 handelt, ist peripher mit einem Außengewinde 12 versehen. Ein hierzu passendes und insbesondere komplementäres Innengewinde 13 befindet sich am Innenumfang der Befestigungsöffnung 3. Dementsprechend kann die Befestigungsöffnung 3 auch als Gewindeöffnung und Gewindebohrung bezeichnet werden.

Auf diese Weise kann die Haltemanschette 4 in die Befestigungsöffnung 3 eingeschraubt werden und ist in der montierten Gebrauchsstellung durch die daraus resultierende Schraubverbindung am Trägerbauteil 2 befestigt. Die Haltemanschette 4 wird soweit eingeschraubt, dass sie mit ihrer Abstützfläche 6 unter Vorspannung an der Anschluss-Außenfläche 7 anliegt, wodurch die Schraubverbindung festgezogen ist.

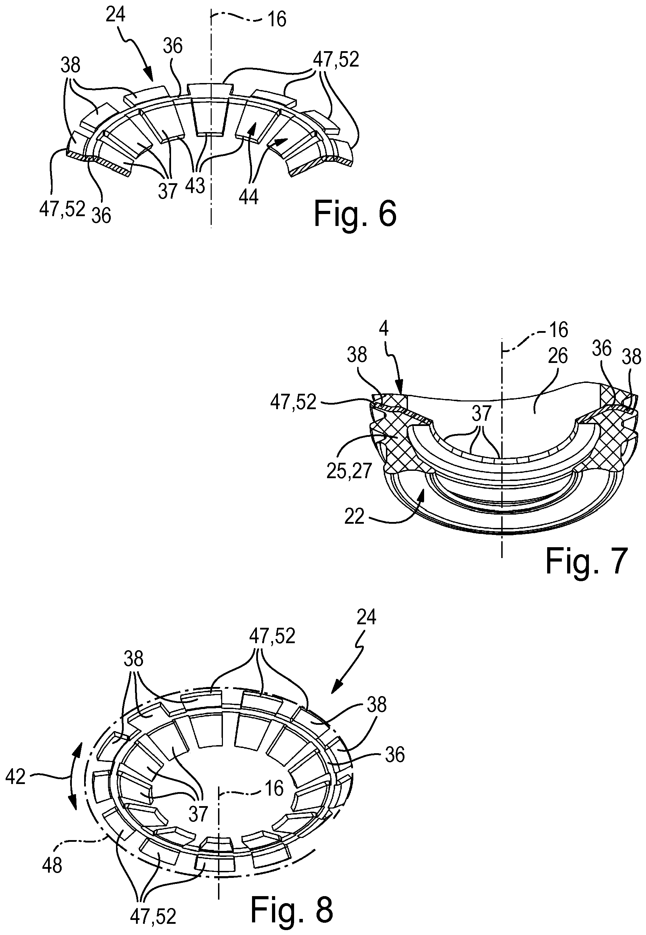

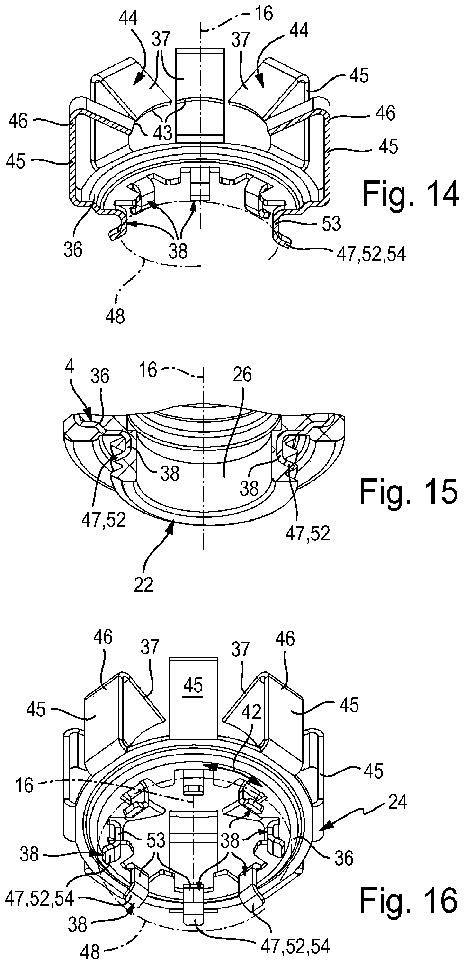

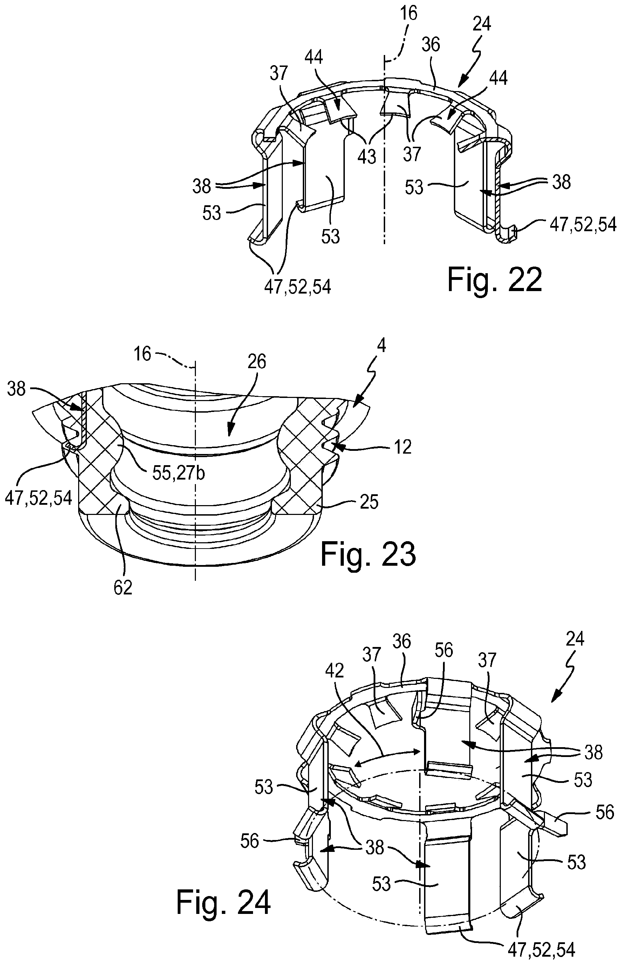

Die Haltemanschette 4 verfügt über ein bevorzugt einstückig ausgebildetes Halteelement 24, das für das axiale Festhalten der durch die rückseitige Mündungsöffnung 26b hindurch in die Einstecköffnung 26 eingesteckten Fluidleitung 5 zuständig ist. Dieses Halteelement 24 ist für das erste Ausführungsbeispiel in Figuren 6 und 8, für das zweite Ausführungsbeispiel in Figuren 14 und 16 und für das dritte Ausführungsbeispiel in Figuren 22 und 24 isoliert abgebildet.

Die Haltemanschette 4 weist zweckmäßigerweise einen das Halteelement 24 zumindest partiell und vorzugsweise zumindest annähernd vollständig umhüllenden Hüllkörper 25 auf. Wie die Haltemanschette 4 insgesamt hat auch der Hüllkörper 25 einen ringförmigen Querschnitt. Das Halteelement 24 ist in diesen Hüllkörper 25 eingebettet und dadurch mit dem Hüllkörper 25 zu einer die Haltemanschette 4 bildenden Baueinheit verbunden, die einheitlich handhabbar ist.

Der Hüllkörper 25 ist einstückig ausgebildet und besteht zweckmäßigerweise aus einem Kunststoffmaterial. Von besonderem Vorteil ist es, wenn er über gummielastische Eigenschaften verfügt, was sich am besten dadurch realisieren lässt, dass er durch Spritzgießen aus einem Elastomermaterial hergestellt wird. Dies trifft auf sämtliche Ausführungsbeispiele zu.

Bevorzugt wird der Hüllkörper 25 bei seiner Spritzgießherstellung an das Halteelement 24 angespritzt, das dabei umspritzt und in das Kunststoffmaterial eingebettet wird.

Bei nicht illustrierten Ausführungsbeispielen besteht der Hüllkörper 25 entweder nur teilweise aus einem gummielastischen Material oder ist komplett als ein starrer Körper ausgeführt. Der gummielastische Aufbau hat allerdings den Vorteil, dass zur Abdichtung bezüglich des Trägerbauteils 2 und der Fluidleitung 5 keine gesonderten Dichtungsmittel erforderlich sind, weil der aus gummielastischem Material bestehende Hüllkörper 25 diese Abdichtfunktion unmittelbar selbst übernehmen kann oder übernimmt.

So definiert der insbesondere hülsenartige Hüllkörper 25 der Ausführungsbeispiele gleichzeitig eine Dichtungsstruktur 27, die bereichsweise mit dem Trägerbauteil 2 und ebenso bereichsweise mit der Außenumfangsfläche 28 der Fluidleitung 5 dichtend zusammenwirkt.

Exemplarisch ist durch die Dichtungsstruktur 27 mindestens ein zum abdichtenden Anliegen am Trägerbauteil 2 vorgesehener ringförmiger Außendichtungsabschnitt 27a und mindestens ein die eingesteckte Fluidleitung 5 an ihrer Außenumfangsfläche 8 abdichtend umschließender Innendichtungsabschnitt 27b definiert. Sowohl der mindestens eine Außendichtungsabschnitt 27a als auch der mindestens eine Innendichtungsabschnitt 27b sind vorzugsweise wulstförmig und/oder lippenförmig ausgebildet.

Das Außengewinde 12 der Haltemanschette 4 befindet sich am peripheren Außenumfang des Hüllkörpers 25. Im Bereich des Befestigungsabschnittes 17 weist der Hüllkörper 25 einen hülsenförmigen Außengewindeabschnitt 32 auf, in den das Außengewinde 12 eingeformt ist. In an sich bekannter Weise setzt sich das Außengewinde 12 aus einer sich wendelförmig um die Längsachse 16 herum erstreckenden Furche 33 und einer diese Wendelförmige Furche 33 jeweils axial beidseits flankierenden und sich ebenfalls wendelförmig um die Längsachse 16 herum erstreckenden Erhebung 34 zusammen.

Das Innengewinde der Befestigungsöffnung 3 hat einen nutförmigen Gewindegang 35, der sich wendelförmig um die Längsachse 15 der Befestigungsöffnung 3 herum erstreckt. Das Außengewinde 12 greift mit seiner wendelförmigen Erhebung 34 in diesen nutförmigen Gewindegang 35 ein. Dadurch ergibt sich eine radiale Überlappung, aus der in an sich bekannter Weise eine axial formschlüssige Verbindung zwischen dem Innengwinde 13 und dem Außengewinde 12 resultiert.

Das schon angesprochene Halteelement 24 ist ringförmig strukturiert und koaxial zu dem Hüllkörper 25 ausgerichtet. Es verfügt bei allen Ausführungsbeispielen zweckmäßigerweise über einen als Tragring 36 bezeichneten ringförmigen Tragabschnitt, der koaxial zu der Längsachse 16 angeordnet ist und der zweckmäßigerweise zur Gänze vom Material des Hüllkörpers 25 umhüllt ist. Dieser Tragring 36 trägt sowohl eine Mehrzahl von Halteklauen 37 als auch eine Mehrzahl von Sicherungsarmen 38. Zweckmäßigerweise sind der Tragring 36, die Halteklauen 37 und die Sicherungsarme 38 einstückig miteinander verbunden.

Der Tragring 36 hat eine Umfangsrichtung, die in den Figuren 8, 16 und 24 durch einen Doppelpfeil bei 42 kenntlich gemacht ist und bei der es sich um die Richtung rings um die Längsachse 16 der Haltemanschette 4 handelt. Sowohl die Halteklauen 37 als auch die Sicherungsarme 38 sind an dem Tragring 36 in dessen Umfangsrichtung 42 verteilt angeordnet, wobei zwischen jeweils benachbarten Halteklauen 37 und zwischen jeweils benachbarten Sicherungsarmen 38 zweckmäßigerweise ein Abstand vorliegt. Dieser Abstand ist von dem Tragring 36 überbrückt, sodass in der Umfangsrichtung 42 jeweils unmittelbar benachbart zueinander angeordnete Halteklauen 37 und Sicherungsarme 38 durch einen von einem Umfangsabschnitt des Tragringes 36 gebildeten Verbindungssteg miteinander verbunden sind.

Die Halteklauen 37 sind so angeordnet, dass sich ein rings um die Längsachse 16 erstreckender Halteklauenkranz ergibt. Die Sicherungsarme 38 sind rings um die Längsachse 16 so angeordnet, dass sich ein Sicherungsarmkranz ergibt. Beide Kränze greifen nicht ineinander ein, dass heißt der Halteklauenkranz ist unabhängig vom Sicherungsarmkranz.

Zweckmäßigerweise sind die Halteklauen 37 und die Sicherungsarme 38 paarweise jeweils am gleichen Umfangsabschnitt des Tragringes 36 angeordnet. Mit anderen Worten befindet sich an jedem Umfangsabschnitt des Tragringes 36, der mit einer Halteklaue 37 ausgestattet ist, auch ein Sicherungsarm 38.

Die eingesteckte Fluidleitung 5 greift durch den Halteklauenkranz 37 hindurch und wird von den federelastisch biegbaren Halteklauen 37 an ihrer Außenumfangsfläche 28 beaufschlagt und dadurch gegen neuerliches Herausziehen gesichert. Die Halteklauen 37 haben zweckmäßigerweise jeweils eine dem Tragring 36 entgegengesetzte Haltekante 43, mit der sie sich in die Wandung der Fluidleitung 5 eindrücken oder eingraben können oder die in der Lage sind, in eine am Außenumfang der Fluidleitung 5 eventuell ausgebildete Haltenut verrastend einzugreifen.

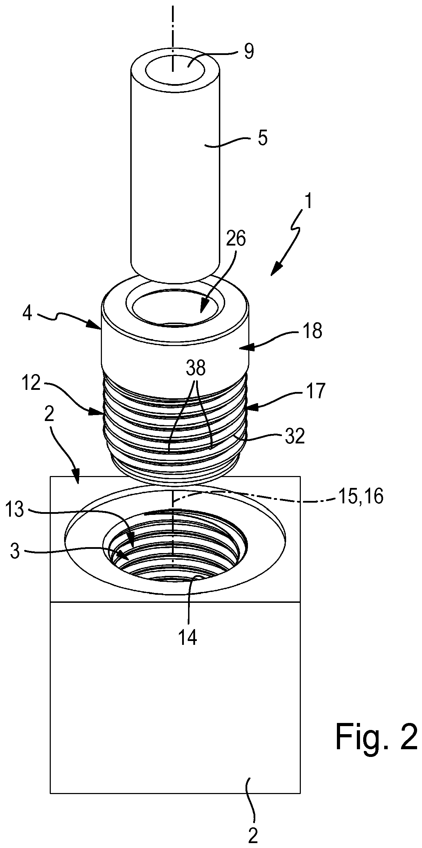

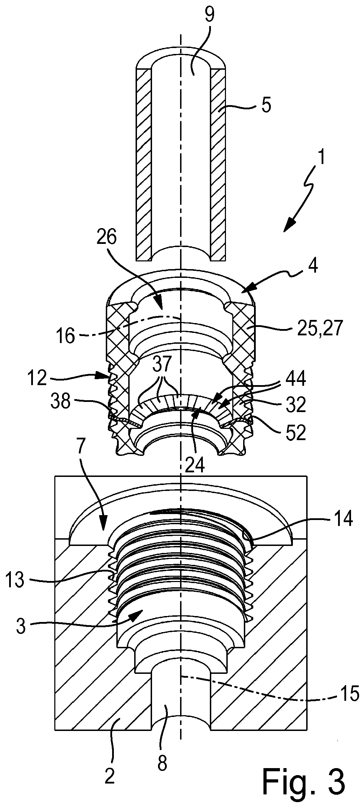

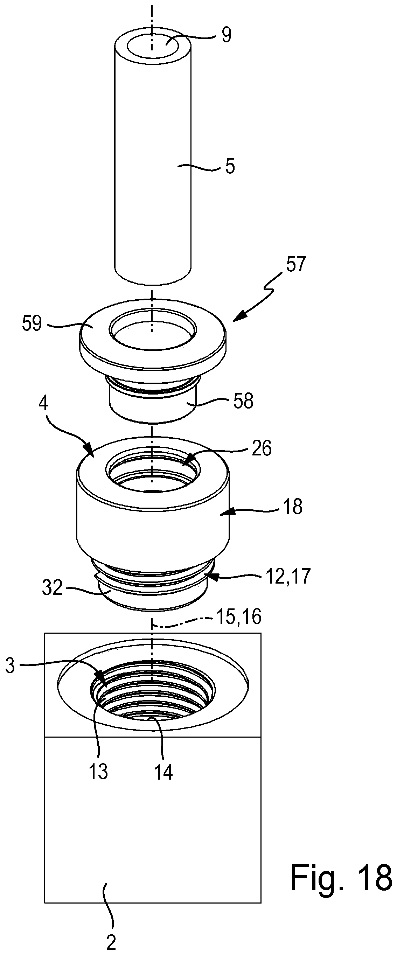

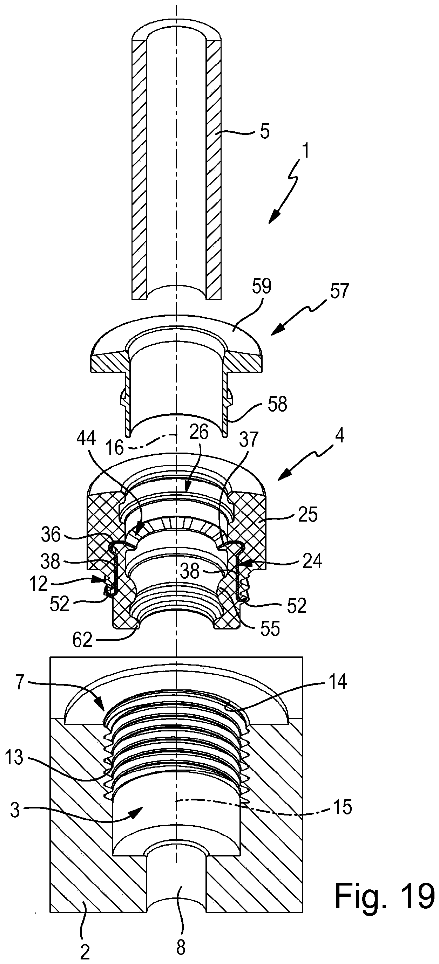

Bei den Ausführungsbeispielen der Figuren 1 bis 8 und der Figuren 17 bis 24 sind die Halteklauen 37 am Innenumfang des Tragringes 36 angeordnet. Sie erstrecken sich ausgehend von dem Tragring 36 jeweils schräg nach radial innen und zugleich axial in Richtung zu der Vorderseite 22. Sie haben folglich jeweils eine schräge Rückfläche 44, die der rückseitigen Mündungsöffnung 26b zugewandt ist und auf die die Fluidleitung 15 beim Einstecken mit ihrer vorauseilenden Stirnfläche auftrifft. Beim weiteren Hineindrücken der Fluidleitung 5 in die Einstecköffnung 26 gleitet die Fluidleitung 5 mit ihrer Stirnfläche an den Rückflächen 44 der Halteklauen 37 ab, die dabei federelastisch nach radial außen gebogen werden und mit der sich dabei aufbauenden Rückstellkraft an die Außenumfangsfläche 28 der durch das Halteelement 24 hindurchgesteckten Fluidleitung 5 andrücken.

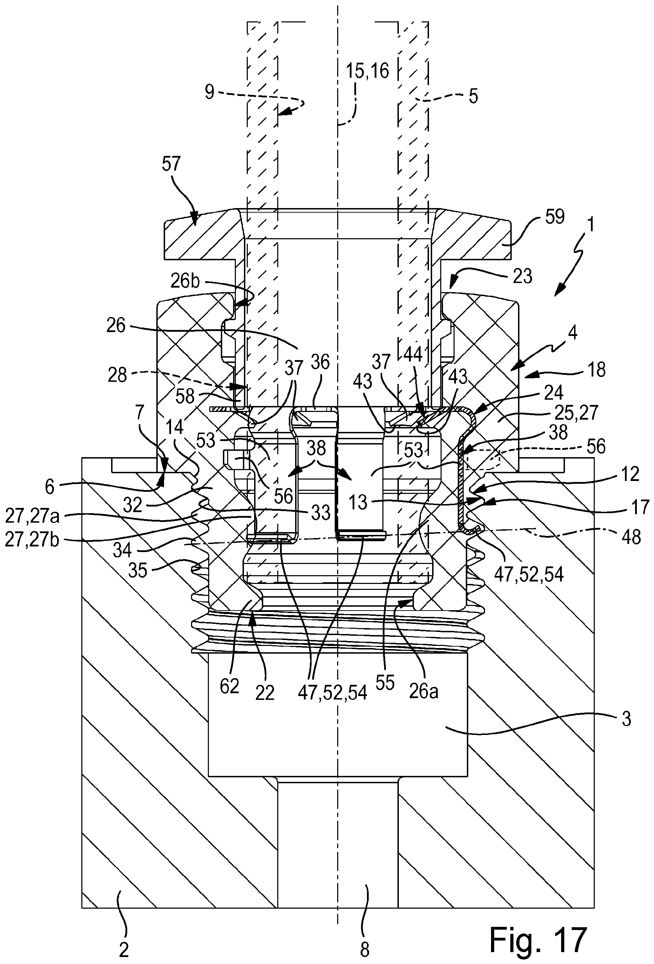

Bei dem Ausführungsbeispiel der Figuren 1 bis 8 ist das Halteelement 24 in den hülsenförmigen Außengewindeabschnitt 32 eingebettet, sodass die Halteklauen 37 im montierten Gebrauchszustand der Haltemanschette 4 im Innern der Befestigungsöffnung 3 zu liegen kommen. Bei dem Ausführungsbeispiel der Figuren 17 bis 24 ist das Halteelement 24 in den Kopfabschnitt 18 eingebettet, sodass die Halteklauen 37 im montierten Gebrauchszustand der Haltemanschette 4 axial außerhalb der Befestigungsöffnung 3 zu liegen kommen.

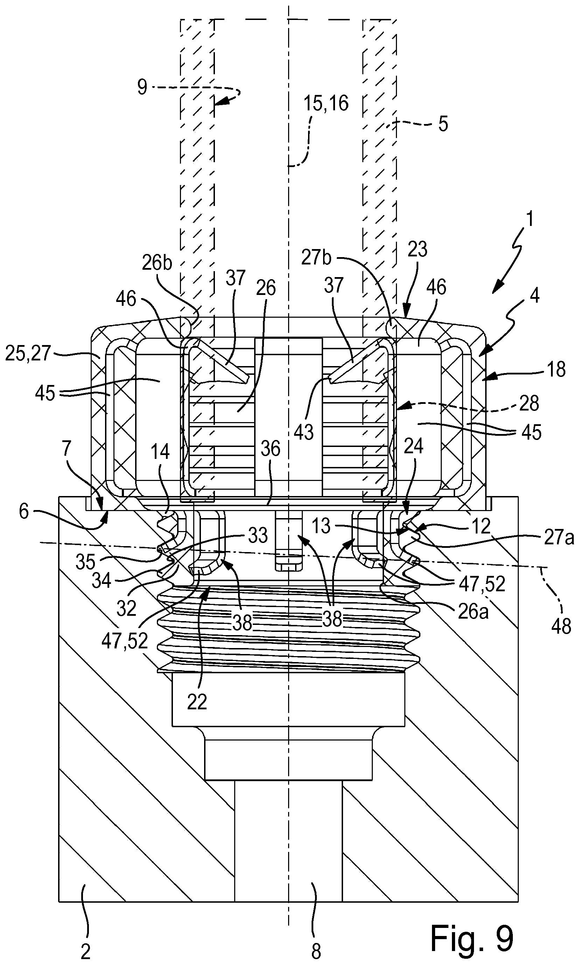

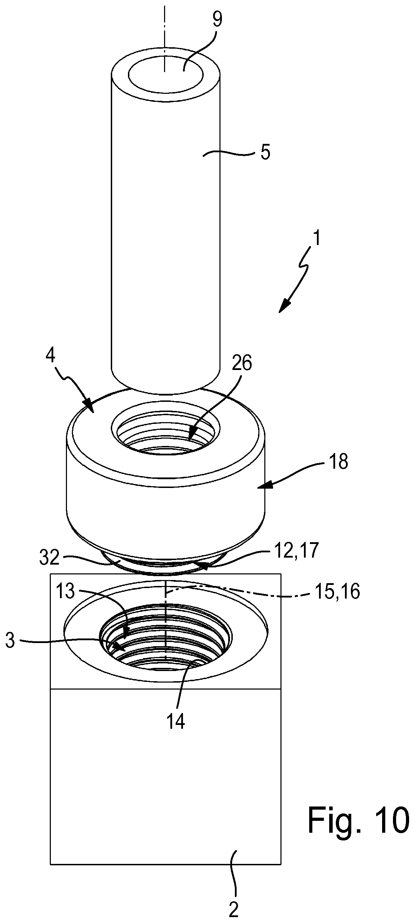

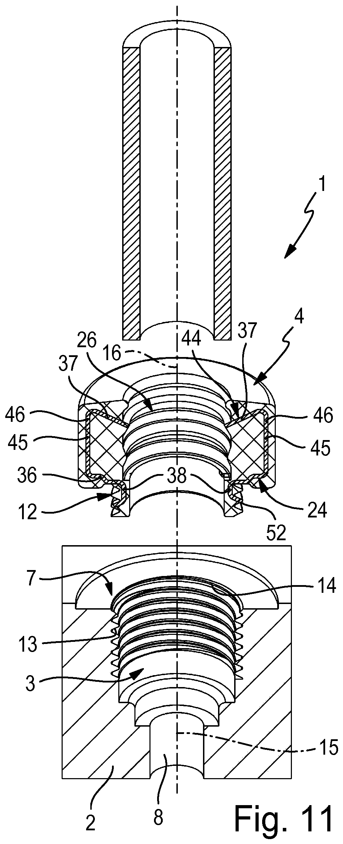

Beim Ausführungsbeispiel der Figuren 9 bis 16 sind die Halteklauen 37 am Außenumfang des Tragringes 36 angeordnet. Anders als bei dem Ausführungsbeispiel der Figuren 1 bis 8 schließen sie sich jedoch nicht unmittelbar an den Tragring 36 an, sondern sitzen an den Endbereichen zusätzlicher Tragarme 45, die in axial abstehender Weise ihrerseits unmittelbar am Außenumfang des Tragringes 36 angebracht sind. Jeder Tragarm 45 erstreckt sich ausgehend vom Tragring 36 axial in Richtung zu der Rückseite 43 und geht in einem zu dem Tragring 36 axial beabstandeten Endbereich 46 in eine der Halteklauen 37 über. Die Anordnung der Halteklauen 37 entspricht grundsätzlich der bereits anhand der Figuren 1 bis 8 beschriebenen, sodass auch beim Ausführungsbeispiel der Figuren 9 bis 16 jede Halteklaue 37 bezüglich der Längsachse 16 schräg ausgerichtet ist, wobei sie ausgehend vom Endbereich 46 des zugeordneten Tragarmes 45 schräg nach radial innen und zugleich axial in Richtung der Vorderseite 22 orientiert ist.

Bei dem Ausführungsbeispiel der Figuren 9 bis 16 ist der Tragring 36 wie bei dem Ausführungsbeispiel der Figuren 17 bis 24 nicht in den Außengewindeabschnitt 32 eingebettet, sondern axial im unmittelbaren Anschluss daran in den Kopfabschnitt 18 des Hüllkörpers 25. In diesen Kopfabschnitt 18 sind zweckmäßigerweise auch die Tragarme 45 und die daran einstückig angeordneten Halteklauen 37 eingebettet. Folglich wird bei dem Ausführungsbeispiel der Figuren 9 bis 16 die eingesteckte Fluidleitung 5 außerhalb der Befestigungsöffnung 3 durch die Halteklauen 37 festgehalten.

Die Sicherungsarme 38 dienen bei allen Ausführungsbeispielen der axial formschlüssigen Fixierung der Haltemanschette 4 im Innengewinde 13 des Trägerbauteils 2. Die Sicherungsarme 38 sind in der Umfangsrichtung 42 entlang des Tragringes 36 verteilt angeordnet, sodass sie auch die Einstecköffnung 26 umrahmen. Jeder Sicherungsarm 38 hat einen bezüglich der Längsachse 16 nach radial außen ragenden Endabschnitt 47, wobei die Endabschnitte 47 sämtlicher Sicherungsarme 38 auf einer strichpunktiert angedeuteten Wendellinie 48 liegen, die sich koaxial um die Längsachse 16 herum erstreckt und deren Steigung an die Steigung des Innengewindes 13 des Trägerbauteils 2 angepasst ist, sodass die Endabschnitte 47 in der Lage sind, präzise in den Gewindegang 35 des Innengewindes 13 einzugreifen, wenn die Haltemanschette 4 in die Befestigungsöffnung 3 eingesetzt wird oder ist.

Mit anderen Worten bilden die Endabschnitte 47 also Eingriffsvorsprünge 52, die so angeordnet sind und derart nach radial außen ragen, dass sie in der Lage sind, in den Gewindegang 35 radial einzugreifen.

Bei der Wendellinie 48 handelt es sich um eine Schraubenlinie oder Helix, die jedoch zweckmäßigerweise eine maximale Erstreckung von 360 Grad besitzt. Auf diese Weise sind die Eingriffsvorsprünge 52 rings um die Längsachse 16 in lediglich einfacher Verteilung vorhanden. Grundsätzlich wäre es allerdings möglich, die Sicherungsarme 38 in Anzahl und Verteilung so auszubilden, dass ihre Eingriffsvorsprünge 52 entlang einer Wendellinie verteilt sind, die sich um mehr als 360 Grad und beispielsweise über 540 Grad erstreckt.

Das Außengewinde 12, bestehend aus der wendelförmigen Furche 33 und der wendelförmigen Erhebung 34, erstreckt sich zweckmäßigerweise mit mehreren Windungen um die Längsachse 16 herum. Allerdings kann das Außengewinde 12 gemäß einer nicht illustrierten alternativen Ausführungsform auch über nur eine einzige Windung verfügen, die sich maximal über 360° erstreckt.

Die Sicherungsarme 38 sind zweckmäßigerweise laschenartig ausgebildet. Sie können zur Erzielung der gewünschten Formgebung abgewinkelt oder abgebogen sein.

Beim Ausführungsbeispiel der Figuren 1 bis 8 sind die Sicherungsarme 38 am Außenumfang des Tragringes 36 angeordnet. Sie ragen dabei ausgehend von dem Tragring 36 mit schräger Ausrichtung nach radial außen weg, wobei sie sich in ihrer Schrägstellung voneinander unterscheiden, sodass ihre die Eingriffsvorsprünge 52 bildenden Endabschnitte 47 auf der angestrebten Wendellinie 48 liegen. Bezogen auf eine zu der Längsachse 16 radiale Ringebene, in der der Tragring 36 liegt, sind die Sicherungsarme 38 zweckmäßigerweise so abgebogen, dass sie ausgehend von einem sich ausschließlich in der Ringebene erstreckenden Sicherungsarm 38 zunächst in die eine axiale Richtung abgebogen sind und daran anschließend in die andere axiale Richtung. Dies bedeutet, dass die Eingriffsvorsprünge 52 teils diesseits und teils jenseits der den Tragring 36 enthaltenden Ringebene des Tragringes 36 liegen.

Bei den beiden Ausführungsbeispielen der Figuren 9 bis 16 und der Figuren 17 bis 24 sind die Sicherungsarme 38 am Innenumfang des Tragringes 36 angeordnet. Sie sind hier jeweils L-förmig ausgebildet und verfügen über einen von dem Tragring 36 in Richtung zu der Vorderseite 22 axial abstehenden ersten L-Schenkel 53. An diesen ersten L-Schenkel 53 schließt sich ein radial nach außen ragender zweiter L-Schenkel 54 an, der den Endabschnitt 47 des Sicherungsarms 38 definiert und folglich den Eingriffsvorsprung 52 bildet.

Die beiden L-Schenkel 53, 54 können rechtwinkelig zueinander abgewinkelt sein. Vorzugsweise schließen die beiden L-Schenkel 53, 54 jedoch einen stumpfen Winkel ein, sodass die zweiten L-Schenkel 54 bezüglich der Längsachse 16 geneigt sind und ausgehend von zugeordneten ersten L-Schenkel 53 schräg nach radial außen und - gleichzeitig - entweder gemäß dem Ausführungsbeispiel der Figuren 9 bis 16 vom Tragring 36 weg in Richtung zu der Vorderseite 22 oder gemäß dem Ausführungsbeispiel der Figuren 17 bis 24 in Richtung zu der Rückseite 23 und somit in Richtung zu dem Tragring 36 weisen. Letzteres hat den Vorteil, dass die Sicherungsarme 38 eine hakenartige Formgebung haben, die eine besonders hohe Verankerungsstabilität verspricht.

Die axiale Länge der ersten L-Schenkel 53 und mithin der axiale Abstand der zweiten L-Schenkel 54 vom Tragring 36 ist so gewählt, dass die zweiten L-Schenkel 54 und mithin die von ihnen gebildeten Eingriffsvorsprünge 52 auf der angestrebten Wendellinie 48 liegen.

Durch die Sicherungsarme 38 wird die Festigkeit der zwischen dem Außengewinde 12 und dem Innengewinde 13 erzielbaren Gewindeverbindung verstärkt. Der Verstärkungseffekt kommt besonders zum Tragen, wenn der Hüllkörper 25 ein nachgiebiges, insbesondere gummielastisches Material ist, was auf alle Ausführungsbeispiele zutrifft.

Zweckmäßigerweise sind die Sicherungsarme 38 einschließlich ihrer Eingriffsvorsprünge 52 in den Hüllkörper 25 eingebettet. Die Eingriffsabschnitte 52 sind zweckmäßigerweise in die wendelförmigen Erhebung 34 des Außengewindes 12 eingebettet. Allerdings können zumindest die im Bereich der Eingriffsvorsprünge 52 liegenden Vorderkanten der Sicherungsarme 38 freiliegen, was insbesondere auch für die Haltekanten 43 der Halteklauen 37 gilt.

Eine vorteilhafte Ausgestaltung der Anschlussvorrichtung 1 sieht vor, dass der Hüllkörper 25 der Haltemanschette 4 an seinem Innenumfang auf axialer Höhe der Eingriffsvorsprünge 52 einen konzentrisch angeordneten, radial nach innen vorstehenden ringförmigen Wulst 55 aufweist. Dies ist bei dem Ausführungsbeispiel der Figuren 17 bis 24 realisiert. Der ringförmige Wulst 55 umschließt die die eingesteckte Gebrauchsstellung einnehmenden Fluidleitung 5, durch die er unter elastischer Verformung radial aufgeweitet wird. Letzteres resultiert daraus, dass der Innendurchmesser des Hüllkörpers 25 im Bereich dieses ringförmigen Wulstes 55 im nicht eingesteckten Zustand der Fluidleitung 5 geringer als der Außendurchmesser der Fluidleitung 5. Durch die eingesteckte Fluidleitung 5 ist der Wulst 55 konzentrisch nach radial außen verformt, sodass der Wulst 55 die rings um den Wulst 55 herum angeordneten Eingriffsvorsprünge 52 der Sicherungsarme 38 radial nach außen in den Gewindegang 35 des Innengewindes 13 des Trägerbauteils 2 hineindrückt. Die dabei stattfindende radiale Bewegung der Eingriffsvorsprünge 52 wird begünstigt, wenn die Eingriffsvorsprünge 52 radial nachgiebig an dem Tragring 36 aufgehängt sind. Letzteres ist beim Ausführungsbeispiel der Fall, da hier die die Eingriffsvorsprünge 52 aufweisenden Sicherungsarme 38 im Bereich der ersten L-Schenkel 53 bevorzugt federelastisch nachgiebig ausgebildet sind

Somit erfährt die Haltemanschette 4 unmittelbar durch die eingesteckte Fluidleitung 5 eine Verstärkung ihrer Befestigungskraft in der Befestigungsöffnung 3. Die Haltemanschette 4 wird dadurch insbesondere auch an einem unbeabsichtigten Verdrehen gehindert. Ist die Fluidleitung 5 später wieder entfernt, sind auch die Befestigungskräfte wieder verringert, sodass sich die Haltemanschette 4 bei Bedarf wieder relativ leicht aus der Befestigungsöffnung 3 herausschrauben lässt.

Der ringförmige Wulst 55 bildet zweckmäßigerweise zugleich den Innendichtungsabschnitt 27b der Dichtungsstruktur 27.

Bei nicht gezeigten Ausführungsbeispielen sind die Sicherungsarme 38 nicht umhüllt und greifen ohne Umhüllung in das Innengewinde 13 der Befestigungsöffnung 3 ein. Die Haltemanschette 4 kann auch so ausgebildet sein, dass einzig und allein die Sicherungsarme 38 das Außengewinde 12 bilden, mit dem die Haltemanschette 4 in die Befestigungsöffnung 3 einschraubbar oder eingeschraubt ist.

Verfügen die Sicherungsarme 38 in bezüglich der Längsachse 16 radialer Richtung über eine gewisse Federelastizität, ist die Haltemanschette 4 sehr einfach dadurch in die Befestigungsöffnung 3 einsetzbar, dass sie ohne überlagerte Drehbewegung lediglich axial in die Befestigungsöffnung 3 eingesteckt wird. Dabei rasten die Eingriffsvorsprünge 52 in das Innengewinde 13 ein. Zur ihrer endgültigen Fixierung wird die Haltemanschette 4 anschließend nur noch geringfügig verdreht, bis der Gewindeeingriff dafür sorgt, dass die Haltemanschette 4 mit ihrer Abstützfläche 6 mit dem Trägerbauteil 2 axial verspannt ist. Dies trifft auf alle illustrierten Ausführungsbeispiele zu.

Das bevorzugt einstückige Halteelement 24 besteht zweckmäßigerweise aus einem federelastischen Metall. Es empfiehlt sich insbesondere Edelstahl. Die geschilderte Formgebung lässt sich vor allem bei einer Ausführung als Stanzbiegeteil kostengünstig realisieren.

Zweckmäßigerweise ist das Halteelement 24 mit mindestens einer radial nach außen abstehende Anschlaglasche 56 ausgestattet, die dazu dient, durch axiale Abstützung am Trägerbauteil 2 die Einschraubtiefe der Haltemanschette 4 bezüglich der Befestigungsöffnung 3 zu begrenzen und einer auf zu starkem Festziehen der Schraubverbindung beruhenden Beschädigung des Hüllkörpers 25 entgegenzuwirken. Das Ausführungsbeispiel der Figuren 17 bis 24 verfügt über ein entsprechend gestaltetes Halteelement 24. Bevorzugt ist das Halteelement 24 mit mehreren in der Umfangsrichtung 42 verteilten Anschlaglaschen 56 versehen, beispielsweise mit drei Stück, die bevorzugt mit gleichen Winkelabständen versetzt zueinander angeordnet sind, sodass eine symmetrische Abstützung erfolgt.

Die Anschlaglaschen 56 ragen radial über den Durchmesser der Befestigungsöffnung 3 hinaus. Somit sind sie in der Lage, durch axiale Abstützung an der Anschluss-Außenfläche 7 des Trägerbauteils 2 die Einschraubtiefe der Haltemanschette 4 zu begrenzen. Die Abstützung erfolgt gemäß dem illustrierten Ausführungsbeispiel bevorzugt indirekt, unter Zwischenschaltung einer nachgiebigen Materialschicht des Hüllkörpers 25, sodass ein direkter Kontakt zwischen den Anschlaglaschen 56 und dem Trägerbauteil 2 vermeidbar ist. Allerdings kann alternativ auch eine direkte Abstützung durch Anlage der Anschlaglaschen 56 an der Anschluss-Außenfläche 7 vorgesehen sein.

Vorzugsweise ist jede Anschlaglasche 56 einstückig mit einem der Sicherungsarme 38 des Halteelementes 24 ausgebildet, wobei jede Anschlaglasche 56 an einem eigenen Sicherungsarm 38 angeordnet ist, von dem sie flügelartig absteht. Bei den L-förmigen Sicherungsarmen 38 der abgebildeten Ausführungsbeispiele sind die Anschlaglaschen 56 zweckmäßigerweise jeweils an einem der seitlichen Längsränder des sich axial erstreckenden ersten L-Schenkels 53 angeordnet, insbesondere als diesbezüglich nach radial außen umgebogene Abschnitte.

Damit die Anschlaglaschen 56 in der axialen Abstützrichtung eine hohe Steifigkeit besitzen, sind sie zweckmäßigerweise jeweils so ausgerichtet, dass ihre als Laschenebene bezeichenbare Hauptausdehnungsebene zur Längsachse 16 der Haltemanschette 4 parallel verläuft. Sie sind also quasi hochkant ausgerichtet und haben dadurch ein besonders hohes Widerstandsmoment gegen Verbiegen.

Bei den Ausführungsbeispielen der Figuren 1 bis 16 ist die maximale Einstecktiefe der Fluidleitung 5 durch eine Abstufung im Innern der Befestigungsöffnung 3 definiert. Vorteilhafter ist es allerdings, wenn die Haltemanschette 4 unmittelbar selbst ein Begrenzungsmittel 62 zur Vorgabe einer maximalen Einstecktiefe der Fluidleitung 5 bildet, sodass man diesbezüglich von der Gestaltung der Befestigungsöffnung 3 unabhängig ist, was eine Kostenersparnis mit sich bringt. Dies ist beim Ausführungsbeispiel der Figuren 17 bis 24 realisiert.

Das Begrenzungsmittel 62 besteht zweckmäßigerweise aus einem zu der Längsachse 16 konzentrischen, ringförmigen Radialvorsprung, der nach innen vorsteht und an dem Hüllkörper 25 im Bereich des Befestigungsabschnittes 17 einstückig ausgebildet ist. Er begrenzt einen Innendurchmesser, der kleiner ist als der Außendurchmesser der Fluidleitung 5. Dieser Innendurchmesser ist insbesondere so klein, dass die Fluidleitung 5 auch mit größerer Kraftanstrengung nicht hindurchschiebbar ist, sodass sich eine Anschlagwirkung für die Fluidleitung 5 einstellt. Zweckmäßigerweise befindet sich das Begrenzungsmittel 62 am vorderen Endbereich des Hüllkörpers 25.

In Verbindung mit dem Begrenzungsmittel 62 kann erreicht werden, dass die in die Gebrauchsstellung eingesteckte Fluidleitung 5 an der axialen Vorderseite 22 nicht über die Haltemanschette 4 hinausragt.

Soll eine eingesteckte Fluidleitung 5 wieder leicht entnommen werden können, besteht die Möglichkeit, die Anschlussvorrichtung 1 mit einer der Haltemanschette 4 zugeordneten zusätzlichen Lösehülse 57 auszustatten, die nur beim Ausführungsbeispiel der Figuren 17 bis 24 illustriert ist. Diese Lösehülse 57 erstreckt sich koaxial in der Haltemanschette 4 und ist diesbezüglich und somit auch bezüglich des Halteelementes 24 axial bewegbar. Ein vorderer Endabschnitt 58 der Lösehülse 57 endet gegenüber den Rückflächen 44 der Halteklauen 37, während ein rückseitiger Betätigungsabschnitt 59 der Lösehülse 57 axial aus der Haltemanschette 24 herausragt. Die Fluidleitung 5 wird beim Anschlussvorgang auch durch die Lösehülse 57 hindurchgesteckt. Zum Lösen der Fluidleitung 5 kann auf den Betätigungsabschnitt 59 der Lösehülse 57 eine drückende Kraft ausgeübt werden, sodass die Lösehülse 57 in Richtung der Vorderseite 22 der Haltemanschette 4 verschoben wird und mit ihrem vorderen Endabschnitt 58 auf die Rückfläche 44 der Halteklauen 37 drückt, die folglich radial nach außen gebogen werden, sodass sie von der Außenumfangsfläche 28 der Fluidleitung 5 abgehoben sind. In diesem Zustand lässt sich die Fluidleitung 5 bequem wieder herausziehen.

## Patentansprüche

1. Anschlussvorrichtung für eine Fluidleitung, ausgeführt als Baugruppe mit mindestens einer Haltemanschette (4) und einem gesonderten Trägerbauteil (2), wobei die Haltemanschette (4) ausgebildet ist, um in einer Gebrauchsstellung mit ihrer Vorderseite (22) voraus in eine ein Innengewinde (13) aufweisende Befestigungsöffnung (3) des gesonderten Trägerbauteils (2) eingesetzt und durch Eingriff in das Innengewinde (13) in dieser Befestigungsöffnung (3) befestigt zu sein und wobei die Haltemanschette (4) axial von einer Einstecköffnung (26) durchsetzt ist, in die eine anzuschließende Fluidleitung (5) von der Rückseite (23) der Haltemanschette (4) her einsteckbar ist, wobei die Haltemanschette (4) ein die Einstecköffnung (26) umschließendes, ringförmig strukturiertes Halteelement (24) aufweist, das über mehrere schräg nach radial innen ragende Halteklauen (37) verfügt, die ausgebildet sind, um den Außenumfang (28) der in die Einstecköffnung (26) eingesteckten Fluidleitung (5) zum Zwecke ihres Festhaltens zu beaufschlagen, wobei das Halteelement (24) mehrere mit Abstand zueinander rings um die Einstecköffnung (26) herum verteilt angeordnete Sicherungsarme (38) aufweist, die über nach radial außen ragende Endabschnitte (47) verfügen, die auf einer hinsichtlich ihrer Steigung an die Steigung des Innengewindes (13) des Trägerbauteils (2) angepassten Wendellinie (48) liegen und die in der Gebrauchsstellung der Haltemanschette (4) in den Gewindegang (35) des Innengewindes (13) des Trägerbauteils (2) eingreifende Eingriffsvorsprünge (52) bilden.

2. Anschlussvorrichtung nach Anspruch 1, **dadurch gekennzeichnet, dass** die Sicherungsarme (38) entlang einer Wendellinie (48) verteilt sind, die eine maximale Erstreckung von 360 Grad aufweist.

3. Anschlussvorrichtung nach Anspruch 1 oder 2, **dadurch gekennzeichnet, dass** die Sicherungsarme (38) laschenartig ausgebildet sind, wobei sie abgebogen oder abgewinkelt sein können, und/oder
dass das Halteelement (24) einstückig ausgebildet ist, wobei es zweckmäßigerweise aus federelastischem Metall besteht und insbesondere als Stanzbiegeteil gefertigt ist.

4. Anschlussvorrichtung nach einem der Ansprüche 1 bis 3, **dadurch gekennzeichnet, dass** die Sicherungsarme (38) einstückig an einem zu der Einstecköffnung (26) koaxialen Tragring (36) des Halteelementes (24) angeordnet sind.

5. Anschlussvorrichtung nach Anspruch 4, **dadurch gekennzeichnet, dass** die Sicherungsarme (38) am Innenumfang oder am Außenumfang des Tragringes (36) angeordnet sind.

6. Anschlussvorrichtung nach Anspruch 4 oder 5, **dadurch gekennzeichnet, dass** die Sicherungsarme (38) von dem Tragring (36) schräg nach radial außen wegragen, wobei sie sich in ihrer Schrägstellung voneinander unterscheiden, derart, dass ihre Endabschnitte (47) auf der Wendellinie (48) liegen.

7. Anschlussvorrichtung nach Anspruch 4 oder 5, **dadurch gekennzeichnet, dass** die Sicherungsarme (38) L-förmig ausgebildet sind und jeweils einen von dem Tragring (36) axial abstehenden ersten L-Schenkel (53) aufweisen, an dem sich ein nach radial außen ragender, den Eingriffsvorsprung (52) bildender zweiter L-Schenkel (54) anschließt, wobei die ersten Schenkel (53) der Sicherungsarme (38) unterschiedlich lang sind, sodass die von den zweiten L-Schenkeln (54) gebildeten Eingriffsvorsprünge (52) auf der Wendellinie (48) liegen, wobei zweckmäßigerweise die die Eingriffsvorsprünge (52) bildenden zweiten L-Schenkel (54) der L-förmigen Sicherungsarme (38) bezogen auf den jeweils zugeordneten ersten L-Schenkel (53) eine schräge Ausrichtung haben, indem sie radial nach außen und gleichzeitig in Richtung zu dem Tragring (36) ragen.

8. Anschlussvorrichtung nach einem der Ansprüche 4 bis 7, **dadurch gekennzeichnet, dass** die Halteklauen (37) ebenfalls an dem Tragring (36) angeordnet und zweckmäßigerweise einstückig mit dem Tragring (36) verbunden sind.

9. Anschlussvorrichtung nach Anspruch 8, **dadurch gekennzeichnet, dass** die Halteklauen (37) am Innenumfang und die Sicherungsarme (38) am Außenumfang des Tragringes (36) angeordnet sind, oder umgekehrt.

10. Anschlussvorrichtung nach Anspruch 8 oder 9, **dadurch gekennzeichnet, dass** jeweils eine Halteklaue (37) und ein Sicherungsarm (38) paarweise am gleichen Umfangsabschnitt des Tragringes (36) angeordnet sind.

11. Anschlussvorrichtung nach einem der Ansprüche 8 bis 10, **dadurch gekennzeichnet, dass** die Halteklauen (37) unmittelbar an dem Tragring (36) angeordnet sind,
oder dass die Halteklauen (37) an von dem Tragring (36) axial abstehenden Tragarmen (45) angeordnet sind.

12. Anschlussvorrichtung nach einem der Ansprüche 1 bis 11, **dadurch gekennzeichnet, dass** das Halteelement (24) mindestens eine radial nach außen abstehende Anschlaglasche (56) aufweist, die durch axiale Abstützung am Trägerbauteil (2) die Einsetztiefe der Haltemanschette (4) bezüglich der Befestigungsöffnung (3) begrenzt und die zweckmäßigerweise mit zur Längsachse (16) des Halteelementes (24) paralleler Laschenebene ausgerichtet ist, wobei zweckmäßigerweise jede Anschlaglasche (56) einstückig an einem der Sicherungsarme (38) des Halteelementes (24) ausgebildet ist.

13. Anschlussvorrichtung nach einem der Ansprüche 1 bis 12, **dadurch gekennzeichnet, dass** das Halteelement (24) zumindest partiell und zweckmäßigerweise zumindest annähernd vollständig in einen einstückigen Hüllkörper (25) der Haltemanschette (4) eingebettet ist, wobei der einstückige Hüllkörper (25) zweckmäßigerweise unmittelbar bei seiner Herstellung durch Spritzgießen unter Abdichtung stoffschlüssig an das Halteelement (24) angeformt ist.

14. Anschlussvorrichtung nach Anspruch 13, **dadurch gekennzeichnet, dass** der Hüllkörper (25) über gummielastische Eigenschaften verfügt und insbesondere ein Elastomerkörper ist, wobei der gummielastische Hüllkörper (25) zweckmäßigerweise eine Dichtungsstruktur (27) bildet, die mindestens einen zum abdichtenden Anliegen am Trägerbauteil (2) vorgesehenen ringförmigen Außendichtungsabschnitt (27a) und mindestens einen die eingesteckte Fluidleitung (5) an ihrem Außenumfang abdichtend umschließenden ringförmigen Innendichtungsabschnitt (27b) aufweist.

15. Anschlussvorrichtung nach Anspruch 13 oder 14, **dadurch gekennzeichnet, dass** der Hüllkörper (25) der Haltemanschette (4) an seinem Innenumfang im Bereich der Eingriffsvorsprünge (52) einen konzentrisch angeordneten, radial nach innen vorstehenden ringförmigen Wulst (55) aufweist, der von der die eingesteckte Gebrauchsstellung einnehmenden Fluidleitung (5) radial nach außen verformt ist und dadurch die Eingriffsvorsprünge (52) der Sicherungsarme (38) in den Gewindegang (35) des Innengewindes (13) des Trägerbauteils (2) hineindrückt.

16. Anschlussvorrichtung nach einem der Ansprüche 13 bis 15, **dadurch gekennzeichnet, dass** der Hüllkörper (25) einen hülsenförmigen Außengewindeabschnitt (32) aufweist, der am Au-ßenumfang über einen von einer wendelförmigen Furche (33) und einer die wendelförmige Furche (33) flankierenden wendelförmigen Erhebung (34) definiertes Außengewinde (12) verfügt und in den die Sicherungsarme (38) derart eingebettet sind, dass ihre Eingriffsvorsprünge (52) jeweils radial in die wendelförmige Erhebung (34) hineinragen.

17. Anschlussvorrichtung nach einem der Ansprüche 1 bis 16, **dadurch gekennzeichnet, dass** das Trägerbauteil (2) ein Gehäusekörper ist, in dem ein mit der Befestigungsöffnung (3) kommunizierender Fluidkanal (8) ausgebildet ist.

## Claims

1. Connecting device for a fluid line, designed as a subassembly with at least one holding sleeve (4) and a separate support component (2), wherein the holding sleeve (4) is designed to be inserted in a position of use with its front side (22) leading into a fastening opening (3) of the separate support component (2) having an internal thread (13) and to be fixed in the position of use in this fastening opening (3) through engagement into the internal thread (13) and wherein passing axially through the holding sleeve (4) is an insertion opening (26) into which a fluid line (5) to be connected may be inserted from the rear (23) of the holding sleeve (4), wherein the holding sleeve (4) has a holding element (24) with an annular structure encompassing the insertion opening (26) and having several holding claws (37) extending radially inwards at an angle and designed to act upon the outer periphery (28) of the fluid line (5) inserted into the insertion opening (26) for the purpose of holding it, wherein the holding element (24) has several securing arms (38) spaced apart from one another around the insertion opening (26) and having radially outwards extending end sections (47) which lie on a helical line (48) matched, in respect of their pitch, to the pitch of the internal thread (13) of the support component (2) and which form, in the position of use of the holding sleeve (4), engaging projections (52) which engage in the thread pitch (35) of the internal thread (13) of the support component (2).

2. Connecting device according to claim 1, **characterised in that** the securing arms (38) are distributed along a helical line (48) which has a maximum extent of 360 degrees.

3. Connecting device according to claim1 or 2, **characterised in that** the securing arms (38) are tab-like in form, wherein they may be bent or angled, and/or that the holding element (24) is single-piece in design, wherein it is expediently made of spring-elastic metal and in particular as a stamped and bent part.

4. Connecting device according to any of claims 1 to 3, **characterised in that** the securing arms (38) are arranged integrally on a support ring (36) of the holding element (24) coaxial to the insertion opening (26).

5. Connecting device according to claim 4, **characterised in that** the securing arms (38) are fitted on to the inner periphery or the outer periphery of the support ring (36).

6. Connecting device according to claim 4 or 5, **characterised in that** the securing arms (38) extend obliquely radially outwards from the support ring (36), wherein they differ from one another in their inclined position in such a way that their end sections (47) lie on the helical line (48).

7. Connecting device according to claim 4 or 5, **characterised in that** the securing arms (38) are L-shaped in form and each have a first L-leg (53) protruding axially from the support ring (36) and adjoined by a second L-leg (54) extending radially outwards and forming the engaging projection (52), wherein the first L-legs (53) of the securing arms (38) are of different length, so that the engaging projections (52) formed by the second L-legs (54) lie on the helical line (48), wherein expediently the second L-legs (54) of the L-shaped securing arms (38) forming the engaging projections (52) have an oblique alignment, relative to the respectively assigned first L-leg (53), while extending radially outwards and simultaneously towards the support ring (36).

8. Connecting device according to any of claims 4 to 7, **characterised in that** the holding claws (37) are likewise fitted to the support ring (36) and are expediently joined integrally to the support ring (36).

9. Connecting device according to claim 8, **characterised in that** the holding claws (37) are fitted to the inner periphery and the securing arms (38) to the outer periphery of the support ring (36), or vice-versa.

10. Connecting device according to claim 8 or 9, **characterised in that** in each case one holding claw (37) and one securing arm (38) are arranged in pairs on the same peripheral portion of the support ring (36).

11. Connecting device according to any of claims 8 to 10, **characterised in that** the holding claws (37) are directly arranged on the support ring (36) or that the holding claws (37) are arranged on support arms (45) protruding axially from the support ring (36).

12. Connecting device according to any of claims 1 to 11, **characterised in that** the holding element (24) has at least one stop tab (56) extending radially outwards and which, through axial support on the support component (2) limits the insertion depth of the holding sleeve (4) with respect to the fastening opening (3) and which expediently is aligned with tab planes parallel to the longitudinal axis (16) of the holding element (24), wherein expediently each stop tab (56) is an integral part of one of the securing arms (38) of the holding element (24).

13. Connecting device according to any of claims 1 to 12, **characterised in that** the holding element (24) is at least partly and expediently at least approximately completely embedded in a single-piece sleeve body (25) of the holding sleeve (4), wherein the single-piece sleeve body (25) is expediently moulded on to the holding element (24) during its production, with sealing by material bonding.

14. Connecting device according to claim 13, **characterised in that** the sleeve body (25) has rubber-elastic properties and in particular is an elastomer body, wherein the rubber-elastic sleeve body (25) expediently forms a sealing structure (27) which has at least one annular outer sealing section (27a) provided for sealing contact with the support component (2), and at least one annular inner sealing section (27b) encompassing the outer periphery of the inserted fluid line (5) with sealing.

15. Connecting device according to claim 13 or 14, **characterised in that** the sleeve body (25) of the holding sleeve (4) has on its inner periphery in the area of the engaging projections (52) a concentrically arranged, radially inwards protruding annular bead (55), which is deformed radially outwards by the fluid line (5) adopting the inserted position of use, and by this means presses the engaging projections (52) of the securing arms (38) into the thread pitch (35) of the internal thread (13) of the support component (2).

16. Connecting device according to any of claims 13 to 15, **characterised in that** the sleeve body (25) has a sleeve-shaped external thread section (32) which has on the outer periphery an external thread (12) defined by a coil-shaped groove (33) and a coil-shaped elevation (34) flanking the coil-shaped groove (33), and in which the securing arms (38) are embedded in such a way that their engaging projections (52) each extend radially into the coil-shaped elevation (34).

17. Connecting device according to any of claims 1 to 16, **characterised in that** the support component (2) is a housing body in which is formed a fluid passage (8) communicating with the fastening opening (3).

## Revendications

1. Dispositif de raccordement pour un conduit de fluide, réalisé sous la forme d'un groupe modulaire avec au moins une manchette de maintien (4) et un composant porteur (2) séparé, dans lequel la manchette de maintien (4) est conçue pour être insérée dans une position d'utilisation par son côté avant (22) dans une ouverture de fixation (3), présentant un filetage intérieur (13), du composant porteur (2) séparé et pour être fixée en prise avec le filetage intérieur (13) dans ladite ouverture de fixation (3) et dans lequel la manchette de maintien (4) est traversée de manière axiale par une ouverture d'enfichage (26), dans laquelle un conduit de fluide (5) à raccorder peut être enfiché depuis le côté arrière (23) de la manchette de maintien (4), dans lequel la manchette de maintien (4) présente un élément de maintien (24) entourant l'ouverture d'enfichage (26), structuré de forme annulaire, lequel élément de maintien dispose de plusieurs pattes de maintien (37) dépassant vers l'intérieur radialement de manière oblique, lesquelles sont conçues afin de soumettre à une action le contour extérieur (28) du conduit de fluide (5) enfiché dans l'ouverture d'enfichage (26) aux fins de son immobilisation, dans lequel l'élément de maintien (24) présente plusieurs bras de blocage (38) disposés de manière répartie tout autour de l'ouverture d'enfichage (26) à distance les uns des autres, lesquels disposent de sections d'extrémité (47) dépassant vers l'extérieur radialement, qui se trouvent sur une ligne hélicoïdale (48) dont la pente est adaptée à la pente du filetage intérieur (13) du composant porteur (2) et qui forment dans la position d'utilisation de la manchette de maintien (4) des parties faisant saillie de prise (52) venant en prise avec le pas de filetage (35) du filetage intérieur (13) du composant porteur (2).

2. Dispositif de raccordement selon la revendication 1, **caractérisé en ce que** les bras de blocage (38) sont répartis le long d'une ligne hélicoïdale (48), qui présente une extension maximale de 360 degrés.

3. Dispositif de raccordement selon la revendication 1 ou 2, **caractérisé en ce que** les bras de blocage (38) sont conçus à la manière de bride, dans lequel ils peuvent être pliés ou coudés, et/ou
**que** l'élément de maintien (24) est conçu d'un seul tenant, dans lequel il est constitué de manière appropriée d'un métal élastique à la manière d'un ressort et est confectionné en particulier sous la forme d'une pièce pliée estampée.

4. Dispositif de raccordement selon l'une des revendications 1 à 3, **caractérisé en ce que** les bras de blocage (38) sont disposés d'un seul tenant au niveau d'une bague de support (36) coaxiale par rapport à l'ouverture d'enfichage (26) de l'élément de maintien (24).

5. Dispositif de raccordement selon la revendication 4, **caractérisé en ce que** les bras de blocage (38) sont disposés au niveau du contour intérieur ou au niveau du contour extérieur de la bague de support (36).

6. Dispositif de raccordement selon la revendication 4 ou 5, **caractérisé en ce que** les bras de blocage (38) dépassent vers l'extérieur radialement de manière oblique de la bague de support (36), dans lequel ils se distinguent les uns des autres dans leur position oblique de telle manière que leurs sections d'extrémité (47) se situent sur la ligne hélicoïdale (48).

7. Dispositif de raccordement selon la revendication 4 ou 5, **caractérisé en ce que** les bras de blocage (38) sont conçus sous la forme de L et présentent respectivement une première branche de L (53) dépassant de manière axiale de la bague de support (36), à laquelle une deuxième branche en L (54) dépassant vers l'extérieur radialement, formant la partie faisant saillie de prise (52) se raccorde, dans lequel les premières branches (53) des bras de blocage (38) sont de longueur différente de sorte que les parties faisant saillie de prise (52) formées par les deuxièmes branches en L (54) se trouvent sur la ligne hélicoïdale (48), dans lequel de manière appropriée les deuxièmes branches en L (54) formant les parties faisant saillie de prise (52) des bras de blocage (38) en forme de L ont une orientation oblique par rapport à la première branche en L (53) respectivement associée **en ce qu'**elles dépassent radialement vers l'extérieur et de manière simultanée en direction de la bague de support (36).

8. Dispositif de raccordement selon l'une des revendications 4 à 7, **caractérisé en ce que** les pattes de maintien (37) sont disposées également au niveau de la bague de support (36) et sont reliées de manière appropriée d'un seul tenant à la bague de support (36).

9. Dispositif de raccordement selon la revendication 8, **caractérisé en ce que** les pattes de maintien (37) sont disposées au niveau de la périphérie intérieure et les bras de blocage (38) sont disposés au niveau de la périphérie extérieure de la bague de support (36), ou inversement.

10. Dispositif de raccordement selon la revendication 8 ou 9, **caractérisé en ce que** respectivement une patte de maintien (37) et un bras de blocage (38) sont disposés par paire au niveau de la même section périphérique de la bague de support (36).

11. Dispositif de raccordement selon l'une des revendications 8 à 10, **caractérisé en ce que** les pattes de maintien (37) sont disposées directement au niveau de la bague de support (36),
ou que les pattes de maintien (37) sont disposées au niveau de bras de support (45) dépassant de manière axiale de la bague de support (36).

12. Dispositif de raccordement selon l'une des revendications 1 à 11, **caractérisé en ce que** l'élément de maintien (24) présente au moins une bride de butée (56) dépassant vers l'extérieur radialement, laquelle délimite, par un appui axial au niveau du composant porteur (2), la profondeur d'insertion de la manchette de maintien (4) par rapport à l'ouverture de fixation (3) et qui est orientée de manière appropriée avec un plan de bride parallèle par rapport à l'axe longitudinal (16) de l'élément de maintien (24), dans lequel de manière appropriée chaque bride de butée (56) est conçue d'un seul tenant au niveau d'un des bras de blocage (38) de l'élément de maintien (24).

13. Dispositif de raccordement selon l'une des revendications 1 à 12, **caractérisé en ce que** l'élément de maintien (24) est intégré au moins en partie et de manière appropriée au moins approximativement en totalité dans un corps enveloppant (25) d'un seul tenant de la manchette de maintien (4), dans lequel le corps enveloppant (25) d'un seul tenant est formé de manière appropriée directement lors de sa fabrication par un moulage par injection avec étanchéification par liaison de matière au niveau de l'élément de maintien (24).

14. Dispositif de raccordement selon la revendication 13, **caractérisé en ce que** le corps enveloppant (25) dispose de propriétés élastiques à la manière de caoutchouc et est en particulier un corps en élastomère, dans lequel le corps enveloppant (25) élastique à la manière de caoutchouc forme de manière appropriée une structure d'étanchéité (27), qui présente au moins une section d'étanchéité extérieure (27a) de forme annulaire prévue au niveau du composant porteur (2) pour reposer tout en assurant l'étanchéité et au moins une section d'étanchéité intérieure (27b) de forme annulaire entourant tout en assurant l'étanchéité le conduit de fluide (5) enfiché au niveau de sa périphérie extérieure.

15. Dispositif de raccordement selon la revendication 13 ou 14, **caractérisé en ce que** le corps enveloppant (25) de la manchette de maintien (4) présente au niveau de périphérie intérieure dans la zone des parties faisant saillie de prise (52) un bourrelet (55) de forme annulaire disposé de manière concentrique, faisant saillie radialement vers l'intérieur, lequel est déformé radialement vers l'extérieur par le conduit de fluide (5) adoptant la position d'utilisation enfichée et enfonce de ce fait les parties faisant saillie de prise (52) des bras de blocage (38) dans le pas de filetage (35) du filetage intérieur (13) du composant porteur (2).

16. Dispositif de raccordement selon l'une des revendications 13 à 15, **caractérisé en ce que** le corps enveloppant (25) présente une section de filetage extérieure (32) en forme de douille, qui dispose au niveau de la périphérie extérieure d'un filetage extérieur (12) défini par un sillon (33) de forme hélicoïdale et par une partie surélevée (34) de forme hélicoïdal flanquant le sillon (33) de forme hélicoïdale et dans laquelle les bras de blocage (38) sont intégrés de telle manière que leurs parties faisant saillie de prise (52) dépassent respectivement radialement dans la partie surélevée (34) de forme hélicoïdale.

17. Dispositif de raccordement selon l'une des revendications 1 à 16, **caractérisé en ce que** le composant porteur (2) est un corps de boîtier, dans lequel un canal de fluide (8) communiquant avec l'ouverture de fixation (3) est conçu.
